(19) Europäisches Patentamt
European Patent Office
Office européen des brevets

(11) **EP 2 847 442 B1**

(12) **EUROPÄISCHE PATENTSCHRIFT**

(45) Veröffentlichungstag und Bekanntmachung des Hinweises auf die Patenterteilung:
**10.07.2019 Patentblatt 2019/28**

(21) Anmeldenummer: **12727781.2**

(22) Anmeldetag: **11.05.2012**

(51) Int Cl.:
*F24S 60/00* (2018.01)     *F22B 27/14* (2006.01)
*F01K 3/00* (2006.01)     *F22B 1/02* (2006.01)
*F28D 20/00* (2006.01)

(86) Internationale Anmeldenummer:
**PCT/EP2012/002042**

(87) Internationale Veröffentlichungsnummer:
**WO 2013/167158 (14.11.2013 Gazette 2013/46)**

(54) **LANGZEITWÄRMESPEICHER UND VERFAHREN ZUR LANGFRISTIGEN WÄRME-SPEICHERUNG VON SOLARENERGIE UND ANDERER ENERGIE-ARTEN MIT WECHSELNDER VERFÜGBARKEIT**

LONG-TERM HEAT STORAGE DEVICE AND METHOD FOR LONG-TERM HEAT STORAGE OF SOLAR ENERGY AND OTHER TYPES OF ENERGY WITH CHANGING AVAILABILITY

ACCUMULATEUR DE CHALEUR LONGUE DURÉE ET PROCÉDÉ D'ACCUMULATION DE CHALEUR À LONG TERME D'UNE ÉNERGIE SOLAIRE ET D'AUTRES TYPES D'ÉNERGIE À DISPONIBILITÉ VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(43) Veröffentlichungstag der Anmeldung:
**18.03.2015 Patentblatt 2015/12**

(73) Patentinhaber:
• Petrovic, Vladan
**34000 Kragujevac (RS)**
• IPROconsult GmbH
**01069 Dresden (DE)**

(72) Erfinder: **PETROVIC, Vladan**
**34000 Kragujevac (RS)**

(74) Vertreter: **Grosse Schumacher Knauer von Hirschhausen**
**Patent- und Rechtsanwälte**
**Frühlingstrasse 43A**
**45133 Essen (DE)**

(56) Entgegenhaltungen:
WO-A1-2008/135100     WO-A2-2011/000522
WO-A2-2012/020233     FR-A1- 2 965 341
US-A- 608 755     US-A- 4 362 149
US-A- 4 418 683

EP 2 847 442 B1

**Beschreibung**

GEBIET DER ERFINDUNG

Die Erfindung betrifft einen Langzeitwärmespeicher zur langfristigen Wärme-Speicherung von Solarenergie und anderer Energie-Arten mit wechselnder Verfügbarkeit. Der Langzeitwärmespeicher umfasst eine Wärmespeichermasse mit einer sie umgebenden Isolierschicht, gemäß dem Oberbegriff von Anspruch 1, Die Erfindung betrifft ferner ein Verfahren zur langfristigen Wärme-Speicherung von Solarenergie und anderer Energie-Arten mit wechselnder Verfügbarkeit mittels eines Langzeitwärmespeichers gemäß dem Oberbegriff von Anspruch 15. Das Ziel der Erfindung ist ein neues technisches Konzept zur Gewährleistung der Stetigkeit bei der Nutzung der Sonnenenergie und anderer Energie-Arten mit wechselnder Verfügbarkeit während des ganzen Jahres. Das Konzept setzt im wesentlichen voraus, dass die Sonnenstrahlung oder die andere Energie-Art mit wechselnder Verfügbarkeit stark konzentriert wird, wodurch hohe Temperaturen erreicht werden, wodurch die Exergie der Wärmespeichermasse erhöht und der exergetische Wirkungsgrad der Anlage angehoben wird. Die von der Sonne oder von der anderen Energie-Quelle mit wechselnder Verfügbarkeit gesammelte Energie wird in einem Langzeitwärmespeicher mit niedrigen Wärme-Verlusten während der Wintermonate gespeichert. Das neue Konzept setzt eine effiziente Übertragung der Sonnenenergie oder der anderen Energie-Art mit wechselnder Verfügbarkeit auf ein Wärmeübertragungsmedium voraus. Anschließend erfolgt der Transport der Wärmeenergie in den Langzeitwärmespeicher und auf die Wärmespeichermasse.

Die Isolierung und die Geometrie des Wärmespeichers sind ebenfalls Bestandteil des neuen Konzeptes. Die neue Art der Isolierung soll auf besonders kostengünstige Weise eine langzeitige Speicherung der Wärmeenergie gewährleisten wobei die Wärmeverluste niedrig gehalten werden.

TECHNOLOGISCHER HINTERGRUND

Die großen Probleme in der Energieversorgung der Welt werden immer deutlicher, insbesondere durch die Vorfälle die bei den bestehenden Kernkraftwerken immer öfter passieren. Es zeigt sich immer deutlicher, dass die Weltsicherheit durch die nukleare Energie immer mehr gefährdet wird.

Dokument WO2008/135100 offenbart zum Beispiel einen mit Mineralwolle isolierten Allzweckwärmespeicher zur Speicherung verschiedener Arten von Energie. Es wurden schon viele neue Solar-, Tiden- und Windkraftwerke die in Europa und in USA gebaut, jedoch erfüllen sie wegen der wechselnden Verfügbarkeit der jeweiligen Energiequelle durchaus nicht die gestellten Anforderungen. Ohnehin gibt es nur wenige Orte auf der Erde wo z.B. die Sonne 365 Tage x 8 Stunden am Tag scheint. Der heutige Stand der Technik lässt nicht zu, an sonnenreichen Tagen 24 Stunden am Tag den Strom aus der Sonnenenergie zu erzeugen, ohne dabei die Energie aus einer zusätzlichen Energiequelle heranziehen zu müssen das gleich gilt sinngemäß für andere Energie-Arten mit wechselnder Verfügbarkeit, wie die Wasserkraft und die Windkraft.. In der neueren Zeit werden bei den solarthermischen Kraftwerken thermische Speicher eingesetzt, so dass sie auch bei Bewölkung oder nach Sonnenuntergang betrieben werden können. Um die sonnenlosen Tage mit Energie zu überbrücken werden zurzeit verschiedene Langzeitwärmespeichersysteme entwickelt, wie: Salzspeicher, Betonspeicher, Druckluftspeicher, Sandspeicher und Pumpspeicher.

Salzspeicher: Die überschüssige Wärme wird in einem Flüssigsalzgemisch aus 60% Natriumnitrat ($NaNO_3$) und 40 % Kaliumnitrat ($KaMO_3$) gespeichert. Beide Stoffe kommen unter anderem als Dünger wie zur Konservierung bei der Lebensmittelproduktion zum Einsatz. Die Flüssigsalzspeicher arbeiten bei Atmosphärendruck und bestehen pro Kraftwerk aus zwei Tanks von z.B. 14 m Höhe und 36 m Durchmesser. Beim Umpumpen vom "kalten" in den "heißen" Tank nimmt das Flüssigkeitsgemisch bei einer Ausgangstemperatur von 290 °C Celsius zusätzliche Wärme auf, so dass es auf ca. 390 °C Celsius erhitzt wird. Ein voller Speicher kann eine Turbine 7.5 Stunden betreiben. Die Speicherkapazität von diesem Salzspeicher bewegt sich um ca. 80 - 100 kWh/m$^3$. Der Nachteil ist, dass die Temperatur der Salzmasse nicht 290 °C unterschreiten darf, daher muss die zusätzliche elektrische Heizung vorgesehen werden, damit die Salzmasse nicht erstarrt.

Betonspeicher: Das Deutsche Zentrum für Luft-und Raumfahrt (DLR) hat mit Industriepartner Ed.Zublin AG einen neuen thermischen Speicher für Solarkraftwerke vorgestellt. Die Pilotanlage basiert auf der Speicherung von Wärme in Beton für Temperaturen bis zu 400 °C. Wärmeübertragungsmedium ist Thermolöl das durch Stahlrohre, die in der Betonmasse eingebettet und eingegossen sind, transportiert wird. Die Formen aus Beton sind von modularem Aufbau und zwar so, dass der Gesamtspeicher aus Einzelmodulen besteht und für beliebige Leistungen eingesetzt werden kann. Die Anfertigungskosten liegen relativ hoch bezogen auf die spezifische Speicherkapazität. Um eine große spezifische Speicherkapazität zu erreichen, muss die Speichertemperatur wesentlich höher liegen. Als Langzeitspeicher wären diese Speicher aus Kostengründen nicht geeignet.

Druckluftspeicher: Für Windkraftwerke spielen Wärmereservoire nur eine Nebenrolle. Die Windanlagen liefern bereits nutzbaren Strom. Damit überschüssige Kilowattstunden in Starkwindphasen nicht verloren gehen, sollen sie Druckluftpumpen antreiben. Diese pressen komprimierte Luft in unterirdische Hohlräume wie beispielweise Salzkavernen. Steigt der Strombedarf, kann die Luft wieder ausströmen und die Turbinenräder von Generatoren in Drehung versetzen. Trivial ist das Komprimieren und Entweichen von Druckluft jedoch nicht. Denn beim Verdichten heizt sich die Luft auf über 600 °C auf. Umgekehrt kühlt sich sie beim Ausströmen ab. Ein hoher Wirkungsgrad des Druckluftspeichers von etwa 70 Prozent lässt sich nur dann erreichen, wenn die Verdichtungswärme ebenfalls gespeichert wird und später die ausströmende Luft wieder erwärmt wird. Diese Anforderung zu verwirklichen ist mit großen Kosten verbunden. Daraus ergibt sich, dass innerhalb eines Druckluftspeichers zusätzlich ein Wärmespeicher vorgesehen werden muss, um die Wärmeenergie separat speichern zu können, damit der hohe Wirkungsgrad eingehalten werden kann. Dadurch wird der ganze Prozess mit zusätzlichen Kosten belastet. Die notwendige Luftdichtigkeit bei 100 bar in unterirdischen Hohlräumen zu erreichen ist keine leichte Aufgabe. - Diese Art der Energiespeicherung ist also nicht in der Lage über die längere Zeiträume Energie zu speichern

Sandspeicher: Am Solar-Institut Jülich der FH Aachen wurde ein Sandspeicherkonzept entwickelt, bei dem Quarzsand als Speichermedium zum Einsatz kommt.Dieses Projekt wurde gefördrt durch Bundesministerium für Umwelt, Naturschutz und Reaktorsicherheit, durch Ministerium für Wirschaft, Mittelstand und Energie des Landes Nordrhein-Wesfalen, durch Deutsches Zentrum DLR für Luft- und Raumfahrt e.V durch Hochschule Aachen, durch Bayerisches Statsministerium für Wirschaft, Infrastruktur, Verkehr und Technologie, durch Kraftanlagen München und durch Solar-Institut Jülich.Über dieses Forschungsvorhaben ist in www.fz-iülich.de sowie in www.taz.de und in www.wdr.de ausreichend berichtet worden. Dieses Konzept verspricht eine Senkung der Speicherkosten, wenn eine effiziente Wärmeübertragung von Luft auf Sand realisiert werden kann. Ziel des Projektes ist die Untersuchung und Entwicklung eines hierfür geeigneten Luft-Sand-Wärmeüberträger-Prototypen, der im Temperaturbereich 400 -900 °C arbeitet. Im Projekt wurde ein entsprechender Versuchsaufbau konstruiert, hergestellt und vermessen. Das Prinzip: Sogenannte Heliostaten konzentrieren die Solarstrahlung auf einen Receiver auf der Spitze eines Solarturmes. Hierbei erwärmt sich die poröse Struktur im Receiver, die wiederum ihre Wärme an Luft abgibt, die aus der Umgebung angesaugt wird. Die auf max.900 °C erhitzte Luft wird zur Erwärmung des Sandes dem Luft-Sand-Wärmeüberträger zugeführt. Der erhitzte Sand gelangt über ein einfaches Fallrohr in einen Heißspeicher und von dort bedarfsgerecht weiter in den Fließbettkühler. Der Fließbettkühler, ein Aggregat, das in einer konventionellen Wirbelschichtfeuerung eingesetzt wird, treibt einen Dampfkreislauf. Der erzeugte Dampf wird schließlich in einem konventionellen Kraftwerksprozess einer Dampfturbine zugeführt, die den Generator zur Stromerzeugung antreibt. Der abgekühlte Sand verlässt den Fließbettkühler bei einer Temperatur von etwa 150 °C und gelangt entweder zum Luft-Sand-Wärmeüberträger zurück oder wird in einem Kalt-Speicher gelagert. Der Sandspeicher wurde vom Solar-Institut-Jülich mit dem Ziel entwickelt, in der Sahara Solarkraftwerke zu bauen wo der Sand reichlich vorhanden und kostenlos ist. Die Beurteilung des neuen Sandspeichersystems kann wie folgt zusammengefasst werden: Die Wärmeübertragung beim beweglichen Sand mit kleinem Korndurchmesser ist hoch und das ist der Vorteil. Die Abriebgefahr beim Sand ist allerdings groß, Der Stromverbrauch beim Sandfließbett ist hoch. die spezifische Speicherkapazität des Sandes ist hoch und die gesamte gespeicherte Wärmemenge kann nicht groß sein, weil die Sandmenge aus verfahrenstechnischen Gründen relativ klein ist. Man kann diesen Wärmespeicher nicht als Langzeitwärmespeicher betrachten.

Pumpspeicher: Ein Pumpspeicherkraftwerk (auch Pumpspeicherwerk PSW genannt) ist eine besondere Form eines Speicherkraftwerkes und dient zur Speicherung von elektrischer Energie durch Hochpumpen von Wasser in Phasen von Energieüberschuss. Dieses Wasser lässt man später wieder bergab fließen und erzeugt dabei mittels Turbinen und Generatoren wieder elektrischen Strom. Die elektrische Energie wird also durch Umwandlung in potentielle Energie von Wasser gespeichert und nach Umwandlung dieser potentiellen Energie in elektrische Energie wieder ins Netz gespeist. Die technische Entwicklung der Pumpspeicherkraftwerke in den letzten Jahren macht es heute möglich, ein Wasserkraftwerk als Pumpspeicherkraftwerk mit einem Gesamtwirkungsgrad von mehr als 75 % zur Ökostrom Erzeugung zu betreiben. Der Pumpspeicher wird heute als Bestandteil einer Solar- oder einer Windanlage vorgesehen. Der Nachteil ist der, dass für die Nutzung eines Pumpspeichers die Naturverhältnisse geeignet sein müssen. Für relativ niedrige elektrische Leistungen sind enorme Wassermengen erforderlich und daher ist ein solcher Speichersystem sehr kostenintensiv. Man braucht enorme Beckenflächen, große Höhenunterschiede, Rohrleitungen mit einigen Meter Durchmesser und eine sehr teure Infrastruktur. Man kann den Speicher nur an speziell geeigneten Orten vorsehen. Diese Speicherart ist in keinem Fall geeignet über mehrere Monate Energie zu speichern.

Zusammenfassend kann man den heutigen Stand der Technik kurz so schildern, dass das Technologieniveau bezüglich der Gewährleistung der Stetigkeit bei der Nutzung der Solarenergie bei weitem nicht zufriedenstellend ist. Man ist heute noch nicht in der Lage den Strom 365 Tage x 24 h während des ganzen Jahres aus der Sonnenenergie zu produzieren. Solange dieses Ziel nicht erreicht wird, kann man nicht die Sonnenenergie oder andere Energie-Arten mit wechselnder Verfügbarkeit als zuverlässige Energiequelle betrachten. Dieses Ziel soll gemäß dieser Erfindung verwirklicht werden.

Der vollständige Ersatz der herkömmlichen Energiearten, wie fossile oder nukleare Brennstoffe, durch alternative Energien ist allein durch die Entwicklung entsprechender Energiespeichersysteme möglich. Die nachhaltige Energie wird gespeichert und über die längere Zeiträume bereit gehalten. Man braucht heute den Energiepufferspeicher der in der Lage ist, gewisse Verfügbarkeits-Schwankungen auszugleichen, um die Stetigkeit bei der Energieversorgung zu gewährleisten. Von allen nachhaltigen Energien ist die Windenergie heutzutage am meisten vertreten, insbesondere in Westeuropa und in USA. Manche Länder haben heute einen Anteil an der gesamten Energieerzeugung von ca. 5 % durch die Windenergie bereitgestellt. Das ist eine beträchtliche Energiemenge. Die typischen Verfügbarkeits-Schwankungen können aber große Probleme in der Energieversorgung hervorrufen. In diesem Fall muss man kurzzeitig die Kohle- oder Gaskraftwerke oder Kernkraftwerke in Betrieb zu nehmen Das ist technisch sehr anspruchsvoll und aufwendig. Kernkraftwerke sind hingegen meist nur für einen Grundlastbetrieb geeignet. Erhebliche Probleme entstehen aber auch dann, wenn ein Überschuss an Windenergie besteht. Man muss kurzzeitig die Energie abführen um den Kollaps in der Energieversorgung zu vermeiden.

Die heute in der Entwicklung befindlichen Speichersysteme erfüllen also die gestellten Anforderungen nicht: Der Salzspeicher hat eine niedrige Speicherkapazität (80 - 100 kWh/m$^3$). Er arbeitet im Bereich relativ niedriger Temperatur (ca. 400 °C).Hinzu kommt noch, dass man die Temperatur der Saltzmasse von 290 °C nicht unterschreiten darf, daher muss die zusätzliche elektrische Heizung vorgesehen werden, damit die Salzmasse nicht erstarrt. Ein Betonspeicher hat ebenfalls eine niedrige Speicherkapazität und ist in der Anfertigung aufwändig. Er wird mit einem Thermolöl betrieben und die Betriebstemperatur liegt in der Größenordnung 400 °C. Bei dieser Temperatur ist keine große spezifische Speicherkapazität zu erwarten. Im Betonspeicher ist eine beträchtliche Menge an Stahlrohren eingebaut. Stahl und Beton haben unterschiedliche Dilatationskoeffizienten und daher besteht immer die Gefahr, dass im Betonspeicher Risse entstehen die die Wärmeleitung verhindern und eine isolierende Wirkung verursachen. Der Sandspeicher arbeitet zwar mit hohen Temperaturen und die Wärmeübertagung ist hoch, jedoch ist die Abriebgefahr sehr hoch. Zum Transport des Sandes ist dementsprechend der Stromverbrauch hoch. Die Nutzung des Sandes ist eventuell nur in der Sahara sinnvoll - in Europa weniger. Gespeicherte Wärmemenge kann nicht groß sein, weil die Sandmenge aus verfahrenstechnischen Gründen relativ klein ist. Man kann nicht diesen Wärmespeicher als Langzeitwärmespeicher betrachten. Beim Druckluftspeicher sieht die Situation besser aus. Man kann zwar im Untergrundspeicher große Energiemenge speichern. Es sind zwar andere verfahrenstechnische Gründe präsent die nicht leicht zu bewältigen sind. Bei Kompression der Luft kommt es zu Temperaturanstieg. Wenn man die komprimierte Luft in den Untergrundspeicher lagert wird die Abkühlung der Luft unvermeidlich und dadurch entstehen beträchtlicher Energieverluste. Zum anderen, ist es technisch anspruchsvoll, die Untergrundkaverne luftdicht zu bekommen. Einen Zwischenspeicher nach der Luftkompression vorzusehen um die Wärmeenergie zu speichern hätte zusätzliche Kosten verursacht. Die Nutzung des Pumpspeichers verlangt geeignete Naturverhältnisse. Die komplette Infrastruktur für einen Pumpspeicher ist erheblich teurer. Es sind enorme Beckenflächen erforderlich um die großen Wassermenge bereit zu halten. Man kann diese Lösung nicht verallgemeinern und ist selten anwendbar. Für relativ niedrige elektrische Leistungen sind enorme Wassermengen erforderlich und daher ist ein solcher Speichersystem sehr kostenintensiv. Diese Speicherart ist in keinem Fall geeignet über mehrere Monate Energie zu speichern.

Aus der DE 10 2010 008 059 A1 ist ein Langzeitwärmespeicher bekannt, der einen für hohe Temperaturen geeigneten Festkörper mit hoher Wärmespeicherzahl umfasst, der thermisch aufgeladen wird. Die Art des Festkörpers wird nicht beschrieben; es soll aber möglich sein, eine Schüttung aus Quarzsand, wie sie zur Wärmespeicherung bekannt ist, zu verwenden. Jedenfalls soll seine thermische Aufladung durch Wärmeleitung erfolgen. Die hierfür vorgesehene Wärmeleitvorrichtung, die eine hohe Wärmeleitfähigkeit besitzen und hochtemperaturfest sein soll, wird ebenfalls nicht näher beschrieben. Es ist eine Wärmeabsorptions-Einheit zum Umwandeln des Sonnenlichts ist der Wärmeleitvorrichtung vorgeschaltet und nicht näher beschrieben. Die gesamte Kombination von, Wärmeabsorptions-Einheit, Wärmeleitvorrichtung und Wärmespeicher soll insgesamt durch eine Ultra-Isolation thermisch isoliert werden. Wie das geschehen soll, bleibt offen. Im Wärmespeicher befindet sich eine Energie-Wandler-Einheit um die Energie aus dem Wärmespeicher zu entkoppeln. Die Arbeitstemperatur des Langzeit-WärmeSpeichers soll zwischen 100 und 800 °C betragen. Es soll eine ganzjährige Beheizung von Wohn- und Bürohäusern möglich sein.

Man sieht daraus, dass keines der bisher vorgelegten Konzepte für die Langzeitspeicherung von Energie den Anforderungen gerecht wird oder sich als praktisch ausführbar erwiesen hat.


DARSTELLUNG DER ERFINDUNG


Die Erfindung liegt die Aufgabe zu Grunde, ein kostengünstiges System zur Nutzung der Sonnenenergie und anderer Energie-Arten mit wechselnder Verfügbarkeit zu schaffen, gemäß dem die bis zu einer maximalen Temperatur, z.B. mittels eines Konzentrators, konzentrierte und als Wärme in einem Absorber an ein Wärmeübertragungsmedium übertragene Sonnenenergie oder andere Energieart mit wechselnder Verfügbarkeit mittels des Wärmeübertragungsmediums an die Wärmespeichermasse abgegeben wird, die sich in einem Langzeitwärmespeicher befindet. Die Wärmespeichermasse sollte bis zu einer Temperatur von ca. 1000 °C erwärmt werden können. Der Langzeitwärmespeicher sollte in der Weise isoliert sein, dass die Wärmeenergie über einen langen Zeitraum (einige Monate bis zu einem halben Jahr) mit niedrigen Wärmeverlusten bereit gehalten werden kann. Zur Lösung dieser Aufgabe wird ein gattungsgemäßer Langzeitwärmespeicher mit den Merkmalen des Anspruchs 1 und ein gattungsgemäßes Verfahren zur langfristigen Wärme-Speicherung von Solarenergie und anderer Energie-Arten mit wechselnder Verfügbarkeit mit den Merkmalen des Anspruchs 15 vorgeschlagen. Demnach schlägt die Erfindung einen gattungsgemäßen Langzeitwärmespeicher vor, umfassend ein thermisch isoliertes Festbett aus einer als Wärmespeichermasse dienenden Gesteinsschüttung aus einem für hohe Betriebs-Temperaturen, insbesondere für Temperaturen zwischen 100 Grad C und 1000 Grad C, vorzugsweise zwischen 300 Grad C und 900 Grad C, geeigneten Material großer spezifischer Wärmekapazität, insbesondere von größer als 600J/kgK, großer Wärmeleitfähigkeit, insbesondere von größer als 1W/mK, sowie großer Dichte, insbesondere von größer als 2kg/dm$^3$, vorzugsweise vulkanischer Herkunft, wie Diabas, Basalt, Granit sowie Gneis, gemäß Anspruch 1, sowie ferner ein gattungsgemäßes Verfahren zur langfristigen Wärme-Speicherung von Solarenergie und anderer Energie-Arten mit wechselnder Verfügbarkeit, gemäß Anspruch 15, wonach als Wärmespeichermasse eine Gesteinsschüttung, die als Granulat ausgebildet ist, großer spezifischer Wärmekapazität, großer Wärmeleitfähigkeit sowie großer Dichte, insbesondere vulkanischer Herkunft, wie Basalt Gestein, Diabas Gestein, Granit Gestein und Gneis Gestein in einem Festbett vorgesehen wird. Das Granulat wird in geeigneter Weise isoliert, so dass die Wärmeverluste während eines langen Zeitraumes niedrig bleiben. Der Wärme-Isolierstoff weist, vorzugsweise, eine Vielzahl von Kontaktwiderständen und/oder eine niedrige Wärmeleitfähigkeit und/oder eine schwammartige, fasrige und/oder poröse Struktur auf und umfasst, besonders bevorzugt, ein mikronisiertes Pulver wie mikronisierte Asche. Die Wärmeisolierung ist von eigenständig erfinderischer Bedeutung. Das Granulat der Wärmespeichermasse wird vorzugsweise mittels eines mit dem Granulat wechselwirkenden Wärmeübertragungsmediums, insbesondere das Granulat durchströmenden Wärmeübertragungsfluids, auf hohe Temperatur erwärmt und in geeigneter Weise isoliert, so dass die Wärmeverluste während eines langen Zeitraumes niedrig bleiben.

Es hat nun auf verschiedene Weise möglich, die Erfindung auszuführen. So hat sich u. A. gezeigt, dass die Geometrie des Langzeitwärmespeichers einen wesentlichen Einfluss auf die Wärmeverluste hat. In diesem Sinne soll die Geometrie des Wärmespeichers optimiert werden. Weiterhin wurden eine optimale Isolierung und eine optimale Dicke der Isolierschicht gefunden. Es hat sich weiter gezeigt, dass die relativen Wärmeverluste des Wärmespeichers mit der Zunahme der Speicherkapazität abnehmen. Es hat sich ferner gezeigt, dass eine Gesteinsschüttung vulkanischer Herkunft für hohe Betriebs-Temperaturen geeignet ist und gleichzeitig gute physikalische Eigenschaften hat, wie große spezifische Wärmekapazität, große Wärmeleitfähigkeit sowie große Dichte. Dabei kommen bevorzugt Steinarten vulkanischer Herkunft, wie Basalt Gestein, Diabas Gestein, Granit Gestein und Gneis Gestein in Betracht. Um eine effiziente Isolierung der Wärmespeichermasse über lange Zeiträume erzielen zu können, wird ein Wärme-Isolierstoff mit guten Isoliereigenschaften verwendet. Dieser Wärme Isolierstoff soll, unter anderem, preisgünstig sein um die Wirtschaftlichkeit der Anlage auf Niveau zu halten. Der Wärme-Isolierstoff sollte eine Vielzahl von Kontaktwiderständen besitzen. Weiterhin, sollte konvektive Strömung innerhalb der Isolierschicht verhindert werden. Durch die große Anzahl der Kontaktwiderstände, wird der Wärmeübergangswiederstand durch die Strahlung vergrößert. Je mehr Partikel nebeneinander liegen, umso größer ist die Anzahl der Wärmeleitungswiederstände. Durch eine große Anzahl der Kontaktwiderstände ist der Wärmeleitungswiederstand durch Konvektion und durch Strahlung vergleichsweise groß. Die Wärmeleitung zwischen zwei Partikeln erfolgt in einem Punkt durch die Berührung. Wenn im Berührungspunkt der Abstand zwischen zwei Partikeln kleiner als die freie molekulare Weglänge ist, fällt die Wärmeleitfähigkeit der Luft um Faktor 10 ab und wirkt als Isolierung. Je kleiner die Partikeln sind und dementsprechend die Anzahl der Kontakte größer umso größer ist auch der Wärmeübergangswiederstand. Es wurde gefunden, dass diese Eigenschaften bei mikronisiertem Pulver zu finden sind. Unter einem mikronisierten Pulver wird im Sinne der Erfindung ein Pulver verstanden bei dem der Partikeldurchmesser unter 100 μ (mikron) liegt. Das Pulver kann z. B. durch Feinmahlen oder aus dem Elektrofilter in den Kraftwerken gewonnen werden. Als besonders geeignet kann mikronisierte Asche aus Elektrofiltern in Kohlekraftwerken betrachtet werden. Unter verschiedenen Arten von mikronisierten Pulvern, insbesondere Aschearten, wurden diejenigen mit niedriger Schüttdichte (insbesondere von 500 kg/m$^3$ bis 1000 kg/m$^3$) als besonders geeignet gefunden. Als Kriterium zur guten Isoliereigenschaft kann eine Wärmeleitfähigkeit der mikronisierten Pulverschicht von ca. λ= 0,09W/mK bis ca. λ= 0,01W/mK, insbesondere von ca. 0.03 W/mK angesehen werden. Dementsprechend sollte die Wärmeleitfähigkeit des Isolierstoffes niedrig sein, weshalb der Isolierstoff bevorzugt eine schwammartige oder poröse Struktur besitzen sollte. Es wurde ferner gefunden, dass nicht nur der Isolierstoff für gute Isolierung von Bedeutung ist, sondern dass auch der Geometrie der Wärmespeichermasse und des Wärmespeichers mit der Isolierung eine besondere Bedeutung zukommt. Auch eine die optimierte Isolierschichtdicke ist von Bedeutung. Es ist auch wichtig, dass Wärmebrücken maximal vermieden werden.

Ein erfindungsgemäßer Langzeitwärmespeicher erfüllt vorzugsweise u. A. folgende Bedingungen: Die Wärmespeichermasse ist beständig gegen hohe Temperaturen von mehreren hundert bis tausend Grad Celsius; die Wärmespeichermasse liegt in Form eines Granulats vor, um ausreichende Wärmeaustauschfläche zum Wärmeübergang zu haben; das Granulat ist beständig gegen Temperaturwechsel; die Korngröße des Granulats liegt in einer bestimmten Größenordnung, um die Druckverluste von strömender Luft oder einem anderen Wärmeübertragungsfluid durch die Schüttung im Rahmen halten.; die Wärme-Isolierung der Wärmespeichermasse hat eine relativ niedrige Wärmeleitfähigkeit und ist preisgünstig und in großen Mengen verfügbar; die Isolierdicke und die Geometrie des Wärmespeichers sind so miteinander abgestimmt, dass die Wärmeverluste der Schüttung auf ein technisches oder wirtschaftlich sinnvolles Minimum reduziert sind; die Kapazität, die Größe und die Geometrie des Langzeitwärmespeichers sind so mit der Speicherzeit abgestimmt dass, die Wärmeverluste für diese Verhältnise minimal werden.

Die Körnung der Gesteinsschüttung der Wärmespeichermasse kann nach einem anderen Aspekt der Erfindung als polydisperses System so ausgelegt sein oder werden, dass eine gewünschte Schüttungsdichte erreicht wird und damit die spezifische Wärmespeicherkapazität auf einen gewünschten Wert gebracht werden kann. Unter einem polydispersen System wird im Sinne der Erfindung man eine Mehrkornschüttung verstanden. Man kann die Mehrkornschüttung so zusammensetzen, dass die Porosität oder das Zwischenkornvolumen der Schüttung einen gewünschten Wert bekommt. Als monodisperses System bezeichnet man hingegen eine Einkornschüttung (das ist z.B. eine Kugelschüttung bestehend aus Kugeln gleichen Durchmessers). Die Schüttungsdichte einer Mehrkornschüttung kann durch geschickte Mischungsverhältnisse des Körnungsspektrums wesentlich vergrößert werden und damit auch die spezifische Wärmespeicherkapazität der Schüttung. Das geschieht bevorzugt dadurch, dass das Lückenvolumen von Granulat einer ersten Korngröße oder Korngrößenverteilung durch ein Granulat einer zweiten Korngröße oder Korngrößenverteilung gefüllt wird. Hier kann man, unter Berücksichtigung von Bandbreiten der Fein- und Grobschüttung, wie besonders bevorzugt, von einer quasi bidispersen Schüttung sprechen. Beide Granulate können derselben oder verschiedener Sorte/Art sein.

Als Wärmespeichermasse wird bevorzugt eine Gesteinsschüttung vulkanischer Herkunft genutzt. Gesteinsarten, die dabei als Wärmespeichermasse besonders bevorzugt zum Einsatz kommen, sind:

| Gestein | wahre Dichte kg/dm$^3$ | spezifische Wärme J/kgK | Wärmeleitfähigkeit W/mK | E-Modul N/mm$^2$ | Dehnung 1/K |
|---|---|---|---|---|---|
| Basalt | 2.85 - 3.05 | 800 | 1-1.16 | 9-10x10$^4$ | 1-7x10$^{-8}$ |
| Diabas | 2.75 - 2.95 | 810-900 | 2-4 | 9-10x10$^4$ | 2-5x10$^{-8}$ |
| Granit | 2.6 - 2.8 | 790 | 2.8 | 4-8x10$^4$ | 3-8x10$^{-8}$ |
| Gneis | 2.65 - 2.85 | 1000 | 2.9 | 4-10x10$^4$ | 2-7x10$^{-8}$ |

Die Wärmespeichermasse sollte bis mindestens 800 °C erwärmt werden können. Wenn man von einem mittleren Lückenvolumen der Steinschüttung von 40% ausgeht ($\varepsilon$=0.4) ergibt sich eine mittlere Schüttdichte von ca. 1740 kg/m$^3$. Dabei wurde die wahre Dichte des Diabas-Steines pw=2900 kg/m$^3$ zu Grunde gelegt. Wenn man die Steinschüttung als polydisperses, wie zum Beispiel als bidisperses, System gestaltet, kann die Schüttungsdichte, wie oben erwähnt, durch geschickte Mischungsverhältnisse des Körnungsspektrums wesentlich vergrößert werden und damit auch die spezifische Wärmespeicherkapazität der Steinschüttung, wie in den Ausführungsbeispielen veranschaulicht werden wird.

Es wurde gefunden, dass die nutzbare Speicherkapazität wesentlich vom Verfahren, bzw. von der Art der Nutzung der gespeicherten Energie abhängig ist. Z.B. wird bei einer Speichernutzung für den Zweck der Gebäudeheizung die Temperatur im Speicher vom z.B. 800 °C bis auf 100 °C heruntergefahren. Hier ist $\Delta t$ = 700 °C. Bei der Stromproduktion erfolgt die Abkühlung des Wärmespeichers von z.B. 800 °C bis auf 400 °C heruntergefahren und dabei ist $\Delta t$=400 °C. Bei einer Nutzung der Wärme für das Heizen ist die Speicherkapazität dann also größer. Die Nutzung der gespeicherten Sonnenenergie für das Heizen oder die Kühlen von Gebäuden hat den Vorteil, dass man für das Heizen die Wärmespeichermasse bis zu 100 °C herunter abkühlen kann. Wenn man hingegen Strom mittels einer Luftmaschine, die nach dem Carnot-Prozess arbeitet, erzeugt, hat man die Möglichkeit mit einem hohen Wirkungsgrad von 70% (bei einer Temperatur des Arbeitsmediums von 700 °C) bis zu einem herabfallenden Wirkungsgrad von 21%(bei einer Temperatur des Arbeitsmediums von 100 °C) zu arbeiten. Es ist schwer vorstellbar dass eine Dampfturbine im veränderlichen Druckbereich von z.B. 200 bar bei 500 °C bis 10 bar bei 180 °C, arbeiten kann. Wird hingegen eine Luftmaschine extern mittels der erfindungsgemäß gespeicherten Energie beheizt und in Abhängigkeit davon, wie die Temperatur der Wärmequelle abfällt, der Luftdruck in der Maschine entsprechend, z-B. automatisch, herabgesetzt, wird dadurch der nach Carnot maximal mögliche Wirkungsgrad für die jeweiligen Temperaturen der Wärmequelle herausgeholt; dies natürlich, unter Berücksichtigung der Wärme-und Reibungsverluste.

Das Arbeitsmedium in der Luftmaschine bewegt sich in einem geschlossenen Kreislauf womit gute Voraussetzungen zur Erzielung eines hohen Wirkungsgrades bei der Energieentkoppelung aus dem Wärmespeicher geschaffen werden.

Bei einer praktischen Ausführung der Erfindung geht es darum, die rechnerischen, theoretischen und verfahrenstechnischen Zusammenhänge geeignet zu berücksichtigen, um ein Optimum bei der Langzeitwärmespeicherung mit niedrigsten Wärmeverlusten zu erzielen. Die Geometrie des Wärmespeichers spielt - wie bereits erwähnt - ebenfalls eine wesentliche Rolle. Es lässt sich nachweisen, dass die Wärmeverluste bei einem Langzeitwärmespeicher der kugelförmige Geometrie hat, am niedrigsten sind, danach kommt eine Zylindergeometrie bei der die Höhe gleich dem Durchmesser ist, Würfel und Parallelepiped bei dem die Wärmeverluste am größten sind.

Eine Ausführungsform gemäß dieser Erfindung sieht vor, dass die Wärmespeichermasse vorzugsweise eine Zylinderform erhält (Durchmesser = Höhe des Zylinders). Um dies zu realisieren wird die Steinschüttung in ein zylindrisches Ziegel(ring)-Mauerwerk eingebracht. Auf einem Fundament, vorzugsweise aus Beton, kann eine kreisförmige Platte, vorzugsweise aus Stahl, aufgelegt sein. Auf der Platte wird kreisförmig ein Ringmauerwerk, vorzugsweise aus vollem Ziegel und mittels Mörtels der für die hohe Temperatur (800 °C) geeignet ist, errichtet. Als Boden-Isolierung für die Wärmespeichermasse kann ein mikronisiertes Pulver, wie mikronisierte Asche, die z.B. in einem Elektrofilter anfällt, verwendet werden. Die Schichtdicke des mikronisierten Pulvers wird so bestimmt, dass die Wärmeverluste minimal werden.

Die, insbesondere mikronisierte, Pulverschicht kann, vorzugsweise zweischichtig, mit Steinen, insbesondere aus Ziegel, bepflastert werden. Auf der oder den Steinlage/n wird eine kleinkörnige Feinschüttung der gleichen Herkunft wie die Wärmespeichermasse aufgebracht, z.B. aufgestreut und planiert. Unter einer Feinschüttung wird im Sinne der Erfindung eine Schüttung verstanden, die, im Unterschied zu der Füll- oder Grobschüttung aus Wärmespeichermasse, einen kleineren mittleren Korndurchmesser hat. Z.B. kann, wie insoweit bevorzugt, die Füllschüttung eine Korngröße zwischen 30 und 60mm und die Feinschüttung eine Korngröße zwischen 10 und 20 mm haben. Auf und/oder zwischen der feinkörnigen Gesteinsschüttung (Feinschüttung) werden, z.B. aus Schamotteziegel, Zuführungskanäle für ein Wärmeübertragungsfluid, insbesondere Luft so geformt, dass durch sie Luft als Wärmeübertragungsmedium strömen kann und gleichmäßig über den Boden der Gesteinsschüttung verteilt wird. Es ist das Ziel, das Wärmeübertragungsfluid gleichmäßig über die Steinschüttung zu verteilen. Um dies zu erreichen sind die Zuführungskanäle gleichmäßig auf die Auflagefläche verteilt. Die Höhe der Gesteinsschüttung ist idealer Weise gleich ihrem Durchmesser. Das Ringmauerwerk umschließt die Gesteinsschüttung über die ganze Höhe und an der Spitze der Gesteinsschüttung werden Abführungskanäle für das Wärmeübertragungsfluid in gleicher Weise wie die Zuführung, insbesondere aus Schamotteziegel, geformt. Ebenso werden die Zwischenräume zwischen den Zu- und/oder Abführungs-Kanälen mit Gesteinsschüttung gefüllt. Die durch die Gesteinsschüttung durchströmende Luft wird durch die Abführungs-Kanäle nach außen hin abgeführt und gewünschten Falls in zirkulierender Bewegung gehalten. Die Gesteinsschüttung endet mit Kanalhöhe. Darüber wird, vorzugsweise, die Feinkornschüttung, vorzugsweise der gleichen Herkunft wie die entsprechend gröbere Gesteinsschüttung, aufgetragen, auf welcher die Luftkanäle aus Schamotteziegelstein verlegt werden. Die Feinkornschüttung kann die Verlegung der Ziegelsteine verbessern. Durch die Feinschüttung kann aufgrund des relativ größeren Strömungswiederstandes eine bessere und gleichmäßigere Luftverteilung erreicht werden. Die Feinkornschüttung kann wieder, insbesondere zweischichtig, mit herkömmlichem Stein, insbesondere aus Ziegel bepflastert werden. Damit ist die Wärmespeichermasse allseitig umschlossen. In einem bestimmten Abstand vom Ziegelmauerwerk kann sich als Außenmantel ein Zylinder, vorzugsweise aus Stahl befinden, der den ganzen Raum umschließt. Der Zwischenraum zwischen I einem derartigen Mantel und dem Ringmauerwerk kann mit mikronisiertem Pulver, wie mikronisierter Asche, befüllt sein, die als Isolierung der Wärmespeichermasse dient. Bevorzugt wird eine gleichmäßige Isolierdicke um das Ziegelmauerwerk herum vorgesehen um die Wärmeverluste auf Minimum zu halten. Hierbei ist die Erkenntnis sehr wichtig, dass jedem Energieinhalt der Wärmespeichermasse eine optimale Schichtdicke an Wärmeisolation zugeordnet werden kann, bei der die Wärmeverluste minimal sind. Mit der Zunahme der Schichtdicke der Isolierschicht, nimmt dementsprechend der Durchmesser des Wärmespeichers zu und damit auch die äußere Wärmeübertragungsfläche. Hier ist auch die Wirtschaftlichkeit des Ganzen ein wichtiger Faktor, so dass manchmal größere Wärmeverluste in Kauf genommen werden können, und zwar als Kompromiss zwischen den Wärmeverlusten und den Investitionskosten. Natürlich, spielen die Kosten der gespeicherten Energie dabei eine gravierende Rolle. Andererseits: bei größeren Wärmeverlusten muss dementsprechend der etwa verwendete Konzentrator grösser ausgelegt werden, um diese Verluste zu decken. Es wurde gefunden, dass die optimale Lösung bei der Optimierung der Wärmeverluste zu suchen ist.

Am besten lassen sich die Zusammenhänge anhand eines Beispiels verdeutlichen: Nehmen wir an, dass ein Haus mit der Wohnfläche von 150 m$^2$ und die Höhe der Räume H=2.6 m zu beheizen ist. Man hat 390 m$^3$ zu beheizen wofür eine durchschnittliche Heizleistung während der 6 Monate (vom November bis April nächstes Jahre) von ca.12 kW erforderlich wird oder die gesamte Energiemenge während 6 Monate beträgt 30600 kWh.

Es lässt sich ein Speicher auslegen, mit dem Durchmesser der Wärmespeichermasse Dsm=4.5 m und mit der Höhe der Wärmespeichermasse von Hsm=4.5 m. Für Wärmespeichermasse ist Diabas-Stein vulkanischer Herkunft mit einer Schüttdichte von 2100 kg/m$^3$, berücksichtigt.

Der Korndurchmesser der Gesteinsschüttung liegt zwischen 30-60 mm und die Schüttung besteht aus der Fraktion 15-30 mm um eine Schüttdichte von 2100 kd/m$^3$ zu erreichen. Das Granulat ist in einem zylindrischen Ziegel(ring)-Mauerwerk von 250 mm Wanddicke eingebracht. Ziegelmauerwerk ist befüllt mit 1.4 m Ascheschicht und darüber kommt zweischichtig 120 mm Ziegelstein als Bepflasterung und über den Ziegelstein wird Feinkornschüttung, 100 mm dick gleichmäßig verteilt. Rundherum um das Ziegelmauerwerk ist die Verkleidung aus Blech 3 mm dick vorgesehen. Zwischen dem Ziegelmauerwerk und Verkleidung ist die Ascheschicht 1.4 m dick als Isolierschicht berücksichtigt. Oberhalb der Steinschüttung ist auch die Ascheschicht von 1.4 m Dicke zur Isolierung vorgesehen. Somit betragen die Außenabmessungen des Wärmespeichers: Durchmesser ca. 8 m und die Höhe ca. 8 m.

Mit diesen Abmessungen und mit dem dargestellten Konzept der Isolierung lassen sich die Wärmeverluste für den Zeitraum von April bis November, während der Speicherung der Sonnenenergie, von 7624 kWh berechnen was in Bezug auf die Speicherkapazität von 36700 kWh ca. 21% beträgt.

Es zeigt sich, dass für größere Speicherkapazität relative Verluste immer kleiner werden. Wenn wir eine Auslegung für 10000 m$^2$ Wohnfläche (200 Wohnungen) machen wird sich zeigen, dass die relativen Verluste in der Größenordnung von 4% liegen und bei einer Wohnfläche von 100000 m$^2$ (2000 Wohnungen) relative Verluste liegen in der Größenordnung von ca.1.6%.

Daraus kann man schließen, dass das erfindungsgemäße Konzept des Langzeitwärmespeichers eine hervorragende Möglichkeit bietet die Sonnenenergie in der Sommermonaten zu speichern und während der Wintermonate voll zu heizen.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Langzeitwärmespeichers dargestellt ist. Auch einzelne Merkmale der Ansprüche oder der Ausführungsformen können mit anderen Merkmalen anderer Ansprüche und Ausführungsformen kombiniert werden.

KURZBESCHREIBUNG DER FIGUREN

In der Zeichnung zeigen

Fig.1 zeigt im Vertikalschnitt eine Prinzipskizze des Langzeitwärmespeichers befüllt mit Steingranulat vulkanischer Herkunft das in einem abgeschlossenen zylindrischen Ziegelmauerwerk eingebracht ist. Auf dem Boden des Steingranulats befinden sich Luftverteilungskanäle und an seiner Spitze sind Luftsammelkanäle vorgesehen; um das umschließende Ziegelmauerwerk ist eine Isolierascheschicht vorgesehen um die Wärmeverluste nach außen gering zu halten oder zu unterbinden;

Fig.1A zeigt einen Querschnitt entlang der Linie A-A gemäß Fig.1 durch den Langzeitwärmespeicher. Auf dem Boden der Steinschüttung sind die Luftverteilungskanäle für Heizluft zu sehen;

Fig.1B zeigt in Draufsicht die Luftverteilungskanäle nach Fig.1 und Fig.1A, angefertigt aus Schamotteziegel;

Fig.1C zeigt ein Detail Fig.1 zur Anordnung der Schamotteziegelsteine zur Bildung der Luftkanäle;

Fig.1D zeigt im Detail ein Querschnitt durch den Hauptverteilungskanal;

Fig.1E zeigt eine alternative Ausführungsmöglichkeit zu Fig.1, wonach das ganze Ziegelmauerwerk auf der Isolierascheschicht liegt. Durch diese Ausführungsart sind die Wärmeverluste des Wärmespeichers kleiner, ist diese Ausführung anfertigungstechnisch gesehen, schwieriger;

Fig.1F zeigt ein Detail "A" aus Fig.1 nämlich: die Steinschüttung, die Isolierascheschicht, das Ziegelmauerwerk, die Luftverteilungskanäle, die Bepflasterung der Ascheschicht mittels der Ziegelsteine sowie die Feinkornschüttung;

Fig.2 zeigt den Langzeitwärmespeicher nach Fig.1 mit Außenverkleidung;

Fig.2A zeigt einen Querschnitt durch den Langzeitwärmespeicher mit Außenverkleidung entlang der Linie A-A gemäß Fig.2;

Fig.3 zeigt eine Ausführungsmöglichkeit der Außenverkleidung des Langzeitwärmespeichers, angefertigt aus Blechschalen die segmentweise montiert werden;

Fig.4 zeigt eine Draufsicht der Verkleidung, gemäß Fig.3;

Fig.5 zeigt eine verbesserte Ausführungsform des Langzeitwärmespeichers mit einer zusätzlichen Isolierung, die über die Außenverkleidung aufgetragen wird und einem Schutzblech für die Isolierung;

Fig.5A zeigt einen Querschnitt durch den Wärmespeicher gemäß Fig.5;

FiG.6 zeigt eine Ausführungsmöglichkeit, für den Langzeitwärmespeicher, der im Erdboden angeordnet ist;

Fig.6A zeigt einen Querschnitt des Langzeitwärmespeichers, gemäß Fig.6;

Fig.7A zeigt ein Diagramm der Wärmeverluste eines Wärmespeichers (zylindrische Form mit D=H) in Abhängigkeit von der Isolierdicke der Asche, die die Sonnenenergie speichert von April bis November; die Speicherkapazität entspricht einer Wohnfläche von 150 m$^2$ (3 Wohnungen oder ein Haus);

Fig.7B zeigt Wärmeverluste und (exemplarisch) den Wirkungsgrad eines Wärmespeichers (zylindrische Form mit D=H) in Abhängigkeit von der Isolierdicke der Asche die die Sonnenenergie speichert von April bis November; die Speicherkapazität entspricht einer Wohnfläche von 10.000 m$^2$ (200 Wohnungen);

Fig.7C zeigt Wärmeverluste eines Wärmespeichers (zylindrische Form mit D=H) in Abhängigkeit von der Isolierdicke der Asche die die Sonnenenergie speichert von April bis November; die Speicherkapazität entspricht einer Wohnfläche von 10.0000 m$^2$ (2.000 Wohnungen);

## DETAILLIERTE BESCHREIBUNG VON AUSFÜHRUNGSBEISPIELEN

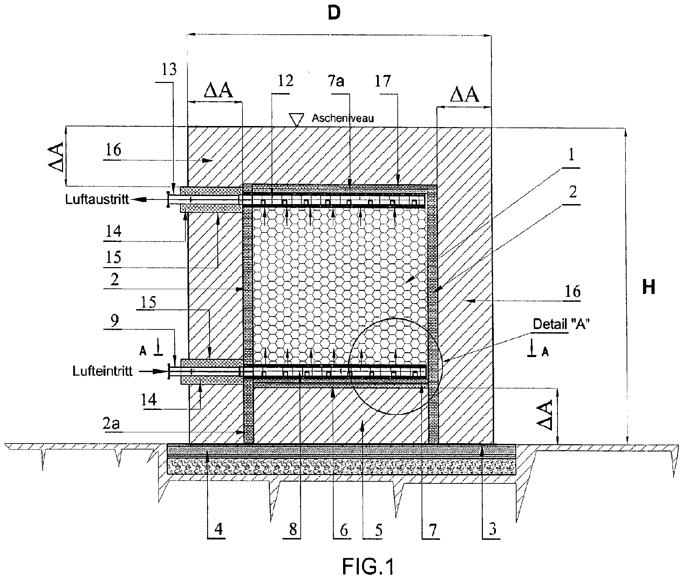

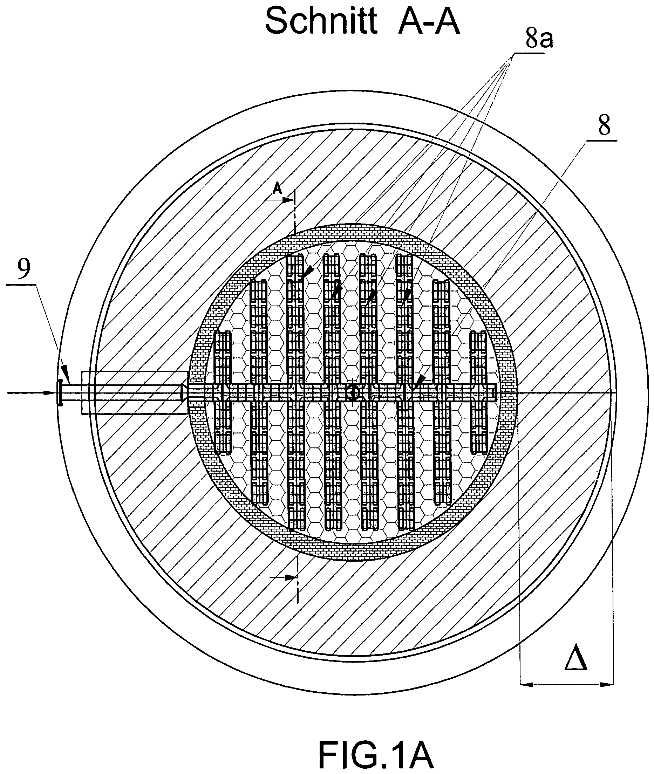

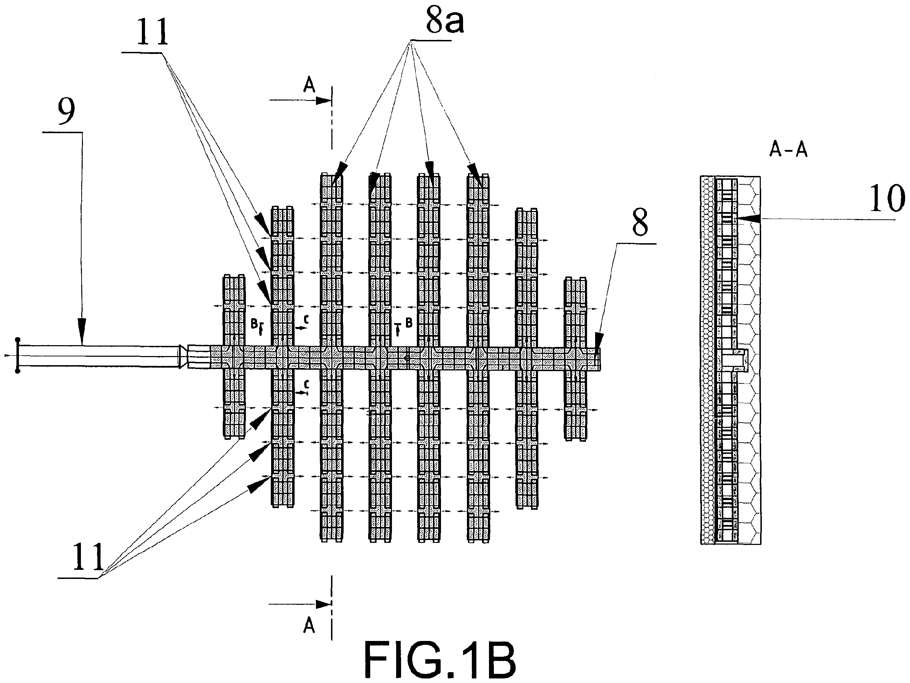

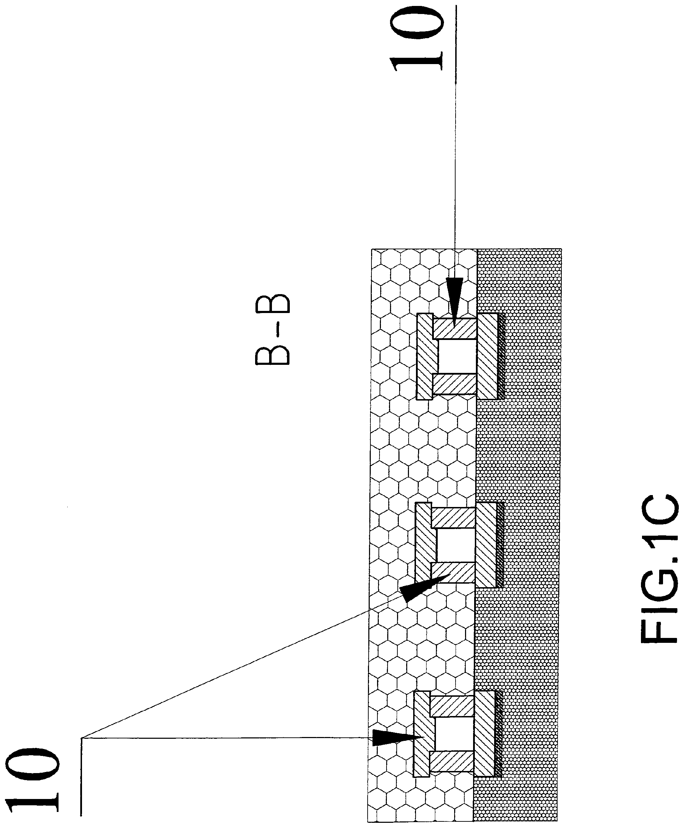

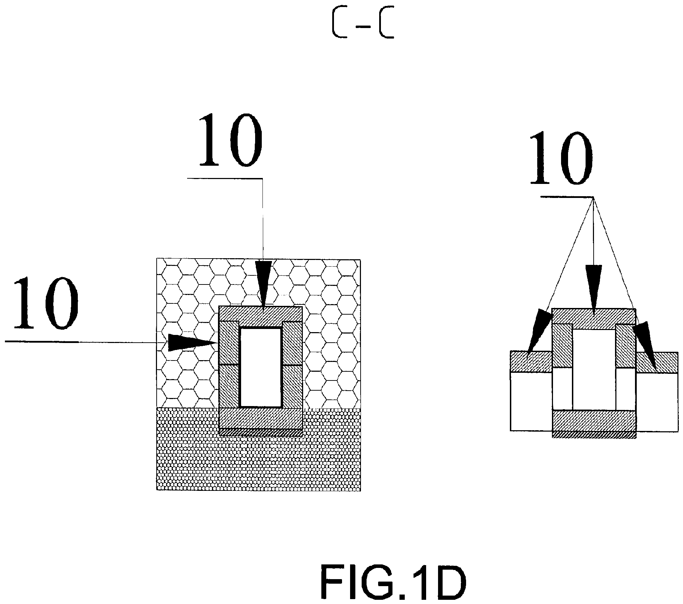

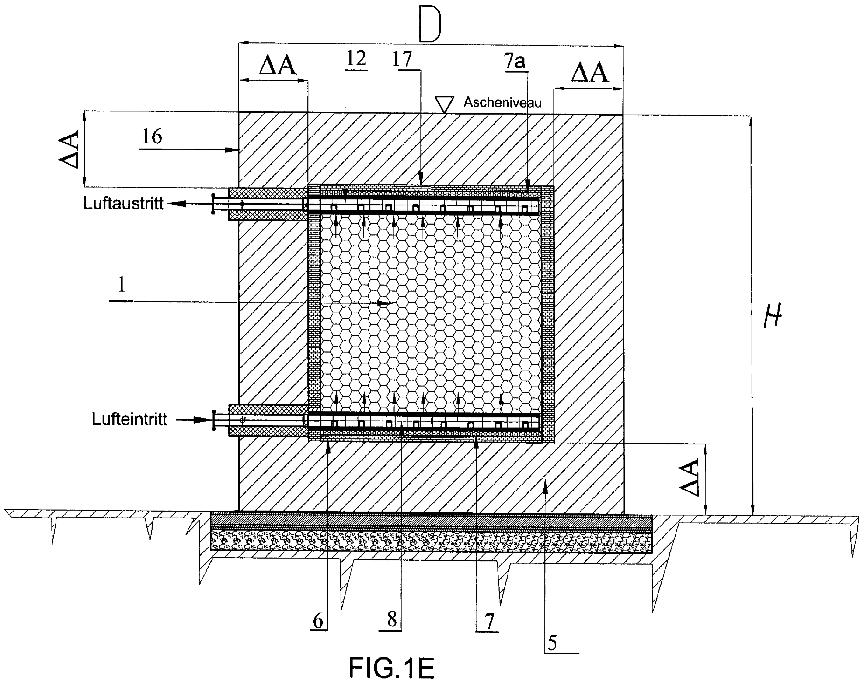

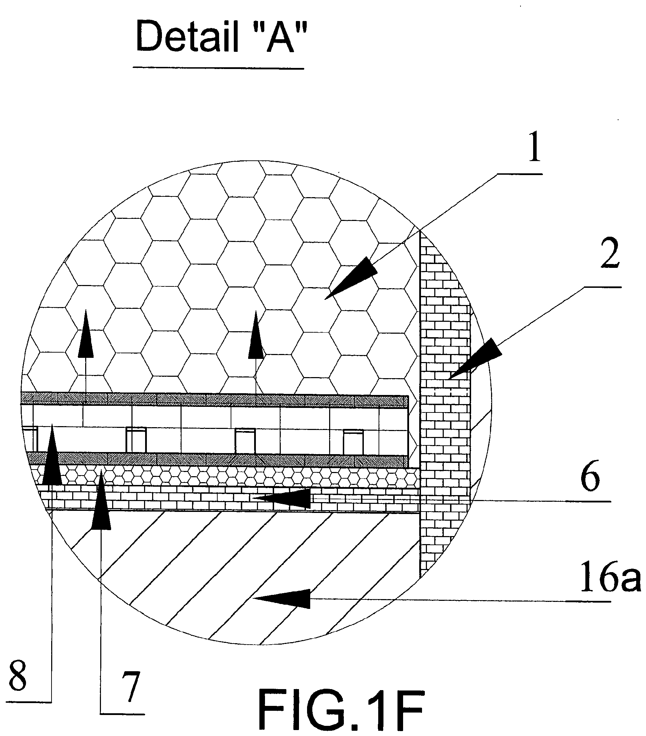

Gemäß **Fig.1** ist eine Gesteinsschüttung 1 vulkanischer Herkunft in einen zylindrisch ummauerten (Mauerwerk **2**) Hohlraum eingebracht. Das den Hohlraum zylindrisch umfassende Mauerwerk **2** liegt auf einer Platte **3**, z.B. aus Stahl auf, die wiederum auf einem Fundament **4** aus Beton liegt. Die Platte **3** dient u. A. dazu, die mögliche Feuchtediffusion aus dem Fundament **4** in die darüber gelegene Ascheschicht (Pulverschüttung 5) zu unterbinden. Die Pulverschüttung **5** (im Folgenden auch als Ascheschüttung **5** bezeichnet) dient zur Bodenisolierung der Gesteinsschüttung **1**. Die Ascheschüttung 5 ist an ihrer Oberseite zweilagig mittels, bevorzugt aus Ziegel, bestehenden Steinen **6** (im Folgenden auch als Ziegelsteine **6** bezeichnet) bepflastert um, u. A., zu verhindern, dass der Aschestaub in den Strom des bevorzugt aus Luft bestehenden Wärmeträgers hineingelangt. Auf den Ziegelsteinen **6** ist eine Feinkornschüttung **7** aufgetragen auf der Zuluftkanäle, insbesondere in Gestalt eines Zuluftkanals **8** (im Folgenden auch als Hauptzuluftkanal **8** bezeichnet) und davon abzweigenden Zuluftverteilkanälen 8a, verlegt sind. Die Feinkornschüttung **7** ist bevorzugt aus dem gleichen Material wie die Steinschüttung **1** vorgesehen, jedoch mit einem kleineren mittleren Korndurchmesser. Die Körnung bei Steinkornschüttung **1** bewegt sich bevorzugt in der Größenordnung zwischen 30 und 80 mm und die Feinkornschüttung zwischen 15 mm und 30 mm. Auf dem Feinkornschüttung **7** sind/werden die Zuluftkanäle **8** und **8a** so verlegt, dass die Heizluft durch ein Eintrittsrohr **9** dem Hauptzuluftkanal **8** zugeführt wird und von da aus auf die seitlich verlegten Luftverteilkanäle **8a** verteilt wird. Die Zuluftkanäle **8** und **8a** werden bevorzugt aus Schamotteziegel 10 oder aus einem anderen Stein, insbesondere Ziegelstein, der für hohe Temperatur geeignet ist, angefertigt. Die Aufbauart der Luftkanäle **8** und **8a** ist in **Fig.1B, Fig.1C** und **FiG.1D** verdeutlicht. In **Fig.1F** ist Detail "A" zur Verdeutlichung der **Fig.1** dargestellt.

Aufgewärmte Luft verlässt die Bodenkanäle **8a** durch Öffnungen **11** (Fig.1B) und wird gleichmäßig über den Boden der Gesteinsschüttung **1** verteilt. Der heiße Luftstrom passiert die Gesteinsschüttung **1** und gibt seine Wärme an sie ab. Oberhalb der Gesteinsschüttung **1** liegende Abluftkanäle **12, 12a** gleichen in Ihrer Aufbauform den Zuluftkanälen **8** und **8a.** Die Abluftkanäle **12, 12a** sind auf dem oder am oberen Ende der Steinschüttung **1** positioniert. Die Zwischenräume zwischen den Abluftkanälen **12, 12a** sind, wie dargestellt und insoweit bevorzugt, mit Steinschüttung **1** ausgefüllt. Über die Gesteinsschüttung **1** und die Abluftkanäle **12, 12a** ist eine weitere Feinkornschüttung **7a** aus gleichem Material wie die Steinschüttung **1** aufgetragen. Die Feinkornschüttung **7a** ist mittels Steinen **17,** wie Ziegelsteinen zweischichtig bepflastert. Somit ist die Gesteinsschüttung **1** - wie weiter unten ergänzend erläutert - räumlich von geformten Steinen umschlossen.

Die Abluftkanäle können als Luftsammelkanäle bezeichnet werden. Der abgekühlte Luftstrom verlässt den Wärmespeicher durch ein an die Luftsammelkanäle angeschlossenes Luftabführrohr **13 (Fig.1).** Das Luftabführrohr **13** ist wärmeisoliert und die Isolierung **14** ist mittels eines Stahlrohres **15,** das samt des Mauerwerks **2** in eine Ascheschüttung **16 (Fig.1)** eingebettet ist, umkleidet. Das Lufteintrittsrohr **9** ist bevorzugt in gleicher Weise wärmeisoliert. Die Ascheschüttung **16** ergänzt die im Bodenbereich unterhalb der zwei unteren Lagen Steine **6** gelegene Ascheschüttung 5.

Das Mauerwerk **2 (Fig.1)** umschließt seitlich die Steinschüttung **1,** die als Wärmespeichermasse dient. Die zwei Lagen von Steinen **6,** wie Ziegelsteine, sowie Steine **17,** wie Ziegelsteine, die in ähnlicher Weise wie die Steine **6** Lagen bilden können, umschließen die Wärmespeichermasse unten bzw. oben. Die Wärmespeichermasse samt der Zu- und Abluftkanäle ist somit allseitig von Gestein, insbesondere in Mauerwerksform und/oder von geformten Steinen, umhüllt. Um dieses Mauerwerk **2, 6** und **17 (Fig.1)** herum befindet sich die vorerwähnte Umhüllung aus den Ascheschüttungen 5 und 16. Diese sind in einer Dicke ∆**A** vorgesehen, wobei der Langzeitwärmespeicher 100 ,wie in **(Fig.1)** dargestellt und insoweit bevorzugt, eine zylindrische Form mit dem Verhältnis D=H (Durchmesser = Höhe) annimmt. Die einzige Wärmebrücke nach außen hin ist der zylindrische Teil des tragenden Ziegelmauerwerks **2a** wo ein gewisser erhöhter Wärmeverlust möglich ist. Dieser Wärmeverlust beträgt in dem Ausführungsbeispiel ca. 3%. Die Lösung gemäß **Fig.1E** zeigt aber, dass das Ziegelmauerwerk **2** ohne eine Verbindung in Gestalt des tragenden Ziegelmauerwerks **2a** zum Fundament vorgesehen sein kann. Somit ist diese Wärmebrücke nach außen hin vermeidbar. Das ganze Ziegelmauerwerk **2, 6** und **17** liegt dann auf der Ascheschüttung **5 (FiG1E)**. Die Gesteinsschüttung **1** ist, vorzugsweise, also, samt der Luftzuführung und Luftabführung, allseitig, insbesondere unter Zwischenfügen einer Hülle aus geformten Steinen, von Pulverschüttung, insbesondere von einer Ascheschüttung **5, 16** eingehüllt.

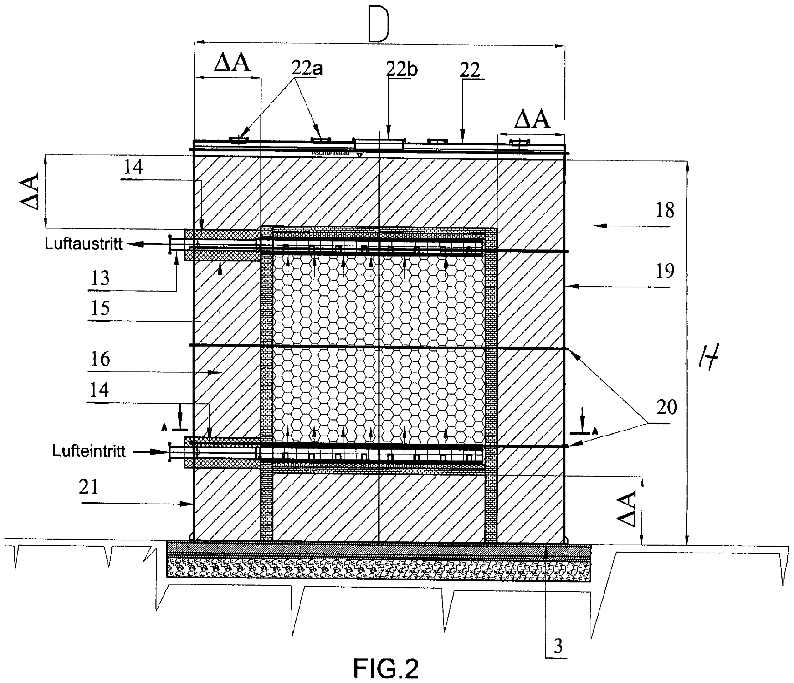

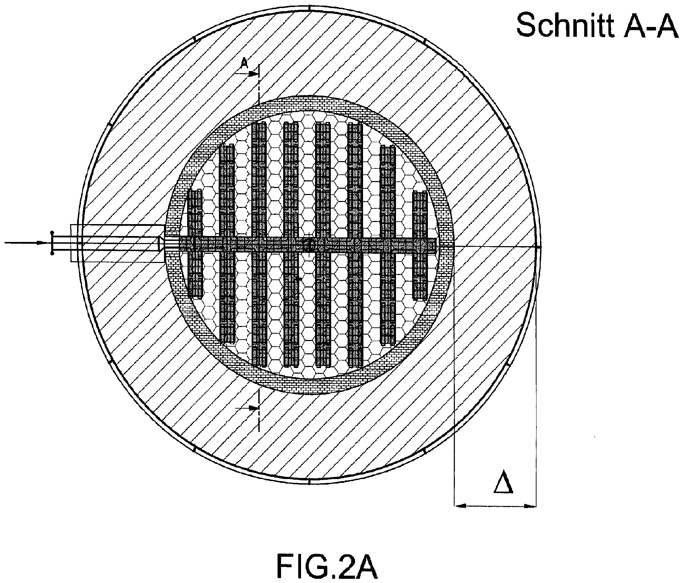

Um die Isolieraschschicht **(16)** kann (gemäß **Fig.2**) eine Außenverkleidung **(18)** so angeordnet sein, dass die Isolierschicht gehalten und das Eindringen von Wasser und feuchter Luft weitgehend verhindert wird. Die Außenverkleidung **18** des Langzeitwärmespeichers **100** kann auf diverse Weise ausgeführt werden, gemäß **Fig.2** besteht die Außenverkleidung **18** aus mehreren zylindrischen Segmenten **19** die mittels Flanschverbindungen **20** miteinander fest verbunden sind. Das erste Bodensegment **21** wird gewünschten Falls mit der Bodenplatte (Stahlplatte **3**) verschweißt, z.B. um das Eindringen der Feuchte in die Aschschicht zu verhindern. Die Außenverkleidung **18** kann mittels eines Deckels **22** durch Flanschverbindungen luftdicht verbunden und/oder abgeschlossen werden. Der Deckel **22** kann mit mehreren Öffnungen **22a** und **22b** versehen sein, die zum Befüllen des Wärmespeichers mit Isolierasche (Pulverschüttung **16**) dienen können. Die Stahlrohre **15,** die zum Schutz der Luftleitungen **9** und **13** dienen, können in der Ascheschicht **16** eingebettet und mit dem Außenmantel, wie den Segmenten **19,** der zur Verkleidung dient, verschweißt sein. Zwischen den Luftrohrleitungen **9** und **13** und Schutzrohren **15** kann eine Isolierung aus keramischer Wolle **14** vorgesehen sein. Damit kann z.B. ein ungestörtes Dehnen der Luftrohrleitungen **9** und **13** beim Temperaturwechsel zu ermöglicht werden. Einer der Vorteile bei dieser Ausführung ist der, dass keine Möglichkeit zum Eindringen von Feuchte in die Ascheschüttung besteht, was von Bedeutung zur einwandfreien Langzeitfunktion des Langzeitwärmespeichers ist. In **Fig.2a** ist ein Horizontalschnitt durch den Langzeitwärmespeicher, gemäß **Fig.2** zur Verdeutlichung gezeigt.

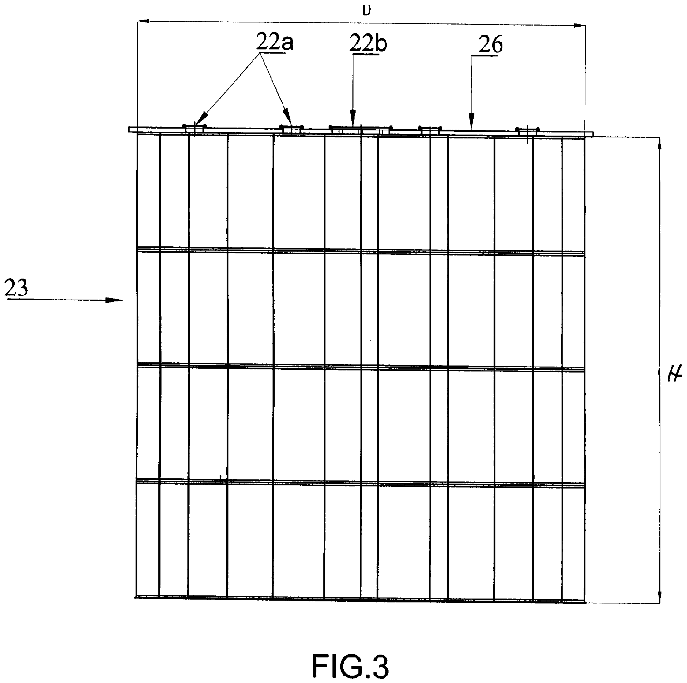

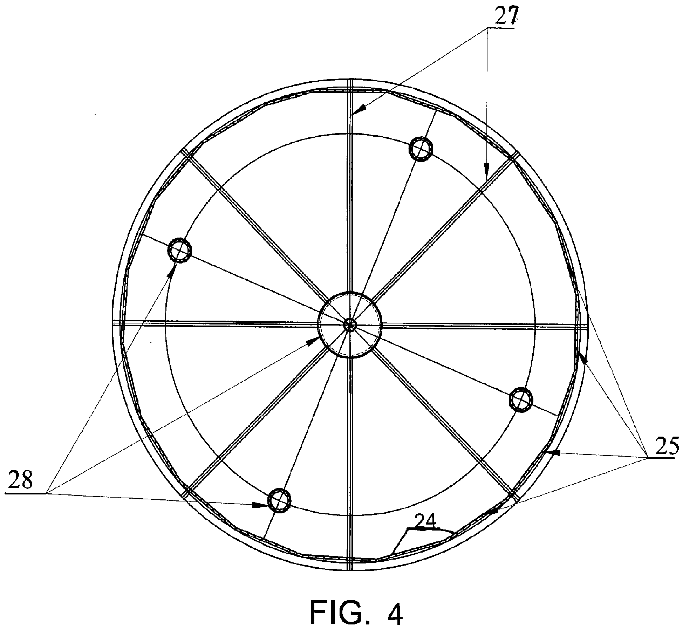

Gemäß **Fig.3** und **4** ist eine andere Ausführungsform zur Verkleidung **23** des Wärmespeichers wiedergegeben, nämlich die Außenverkleidung **23** besteht aus Blechschalen **24** die mit einander rund im Kreis sowie über die Höhe mittels der Schraubenverbindung befestigt sind. Die Blechschalen **24** bilden ein regelmäßiges Vieleck. Gemäß **Fig.4** ist die Draufsicht auf die Außenverkleidung **23** des Wärmespeichers zur Verdeutlichung gezeigt. Dabei ist gezeigt: ein Deckel **26** mit Stegen **27** und mit Öffnungen **28,** die zum Befüllen des Wärmespeichers mit Isolierasche dienen.

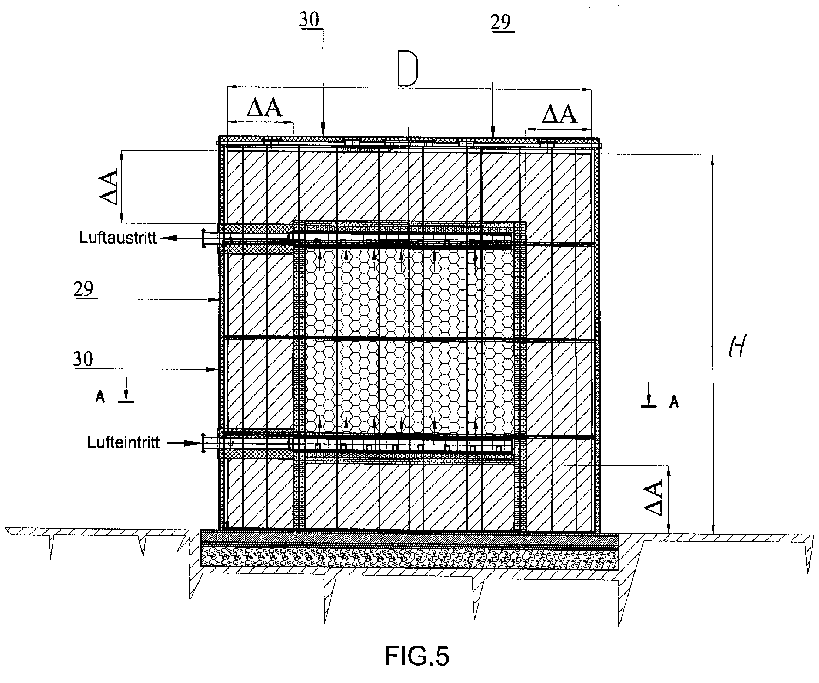

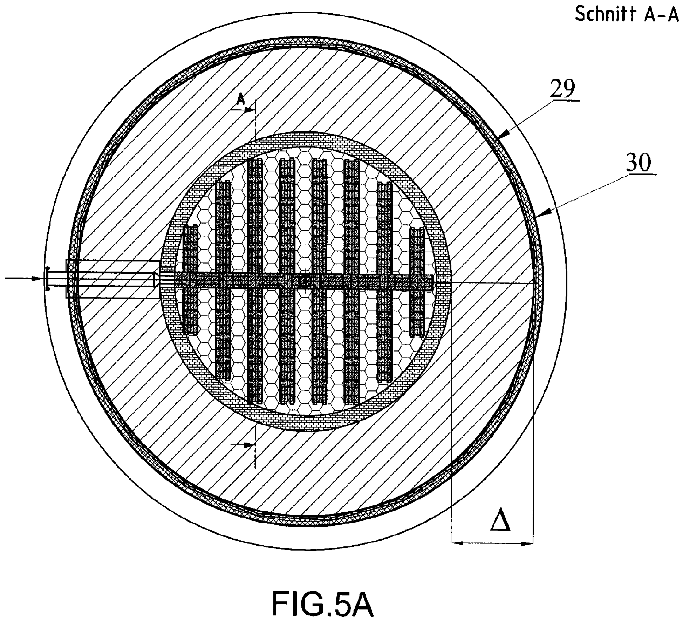

Gemäß **Fig.5** ist eine verbesserte Ausführungsform des Langzeitwärmespeichers mit einer zusätzlichen Isolierung **29** dargestellt. Diese kann aus Mineralwolle bestehen, die über die Außenverkleidung **23** aufgetragen wird. Die Isolierschicht **29** kann auch mittels Blechen, insbesondere mittels sogenannten Trapezblechen **30,** verkleidet sein, um die Isolierschicht **29** gegen die Feuchte zu schützen. In **Fig. 5A** ist ein Horizontalschnitt durch den Wärmespeicher gezeigt um die Isolierung zu verdeutlichen.

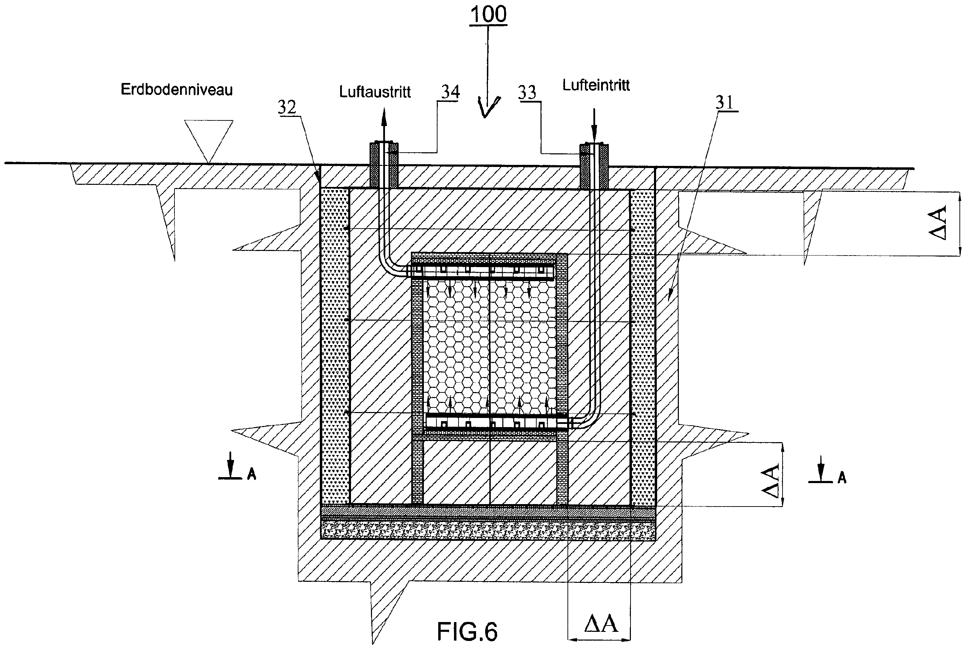

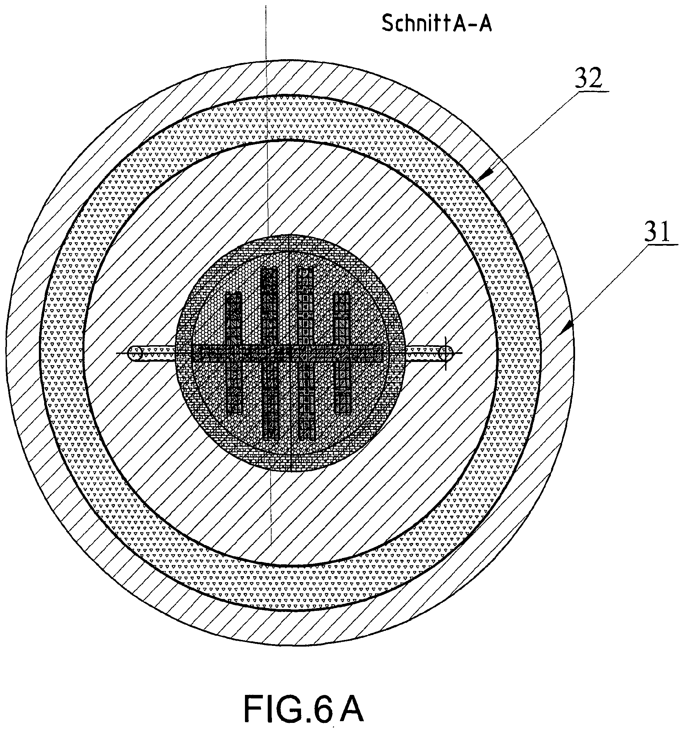

Gemäß **Fig.6** ist eine Ausführungsform wiedergegeben, bei der der Langzeitwärmespeicher 100 im Untergrund **31,** wie im Erdreich, angeordnet wird. Dies mit dem Unterschied zu Fig.1, dass die Außenverkleidung als vollkommen verschlossener Zylinder **32** ausgeführt wird. Der Zylinder **32** wird bevorzugt aus Stahlblech angefertigt und wasser- und luftdicht abgeschlossen. Die aufgewärmte Luft wird durch Rohrleitung **33** dem Langzeitwärmespeicher von unten zugeführt und die abgekühlte Luft wird ihm durch Rohrleitung **34** entnommen. In **Fig.6A** ist ein Horizontalquerschnitt durch den Langzeitwärmespeicher gemäß **Fig. 6.** Der übrige Aufbau des Langzeitwärmespeichers **100** (Gesteinsschüttung, Zu- und Abluftführung, Umhüllung mit geformten Steinen - auch in Gestalt betonierter Wände - und Umhüllung mit Feinkornschüttung und ggf. Blechumhüllung) kann wie bei den vorangehenden Ausführungsbeispielen ausgeführt sein.

Speicherkapazität:

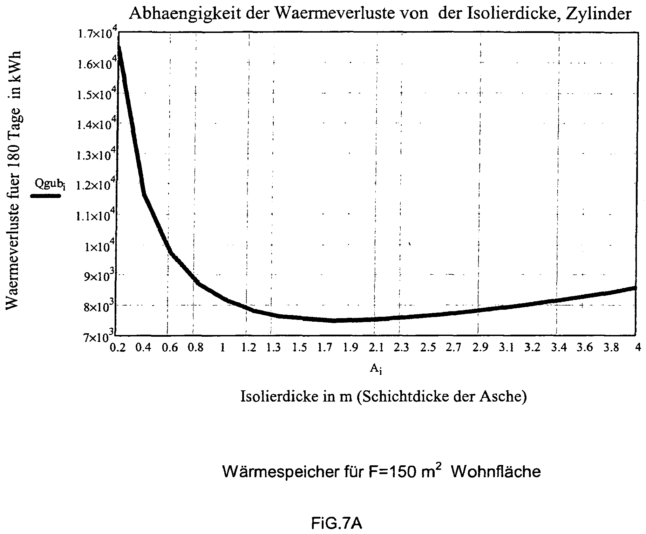

Jede Speicherkapazität und jede geometrische Form hat eine optimale Schichtdicke der Isolierschicht (Pulverschüttung **16, 5)** bei der die Wärmeverluste während der Speicherzeit minimal **(Fig.7A bis 7C)** sind. Die Kurven zeigen die Abhängigkeit Wärmeverluste/ Isolierdicke bei einer Kreiszylinder-Geometrie (H=D) des Wärmespeichers. Bei Zugrundelegen von 180 Tagen Speicherzeit hat man für eine bestimmte Isolierschichtdicke **(16, 5)** ein Minimum. Die optimale wirtschaftliche Isolierschichtdicke **(16,5)** liegt im Bereich 0.5 m bis 2 m und kann für alle Speicherkapazitäten berücksichtigt werden.

Gemäß **Fig.7A** sind die Wärmeverluste eines Wärmespeichers nach der Erfindung in Abhängigkeit von den Schichtdicken einer Gesteinsschüttung aus Asche dargestellt. Der Wärmespeicher soll ausreichend Sonnenenergie aufnehmen können, um ein Objekt von 150 m$^2$ Wohnfläche von z.B. November bis zum folgenden April voll heizen zu können. Die Speicherzeit dauert dann vom April bis Ende Oktober und die Wärmeverluste, während der Speicherzeit sind im Diagramm **Fig.7A** in dargestellt Aus diesem Diagramm kann man sehen, dass für eine bestimmte Schichtdicke, in diesem Fall ist sie um 1.8 m dick, die Wärmeverluste während der Speicherzeit minimal sind. Aus dem Diagramm ist noch zu ersehen, dass mit steigender Schichtdicke der Ascheschicht die Wärmeverluste wieder steigen. Für die optimale Schichtdicke der Asche ergeben sich in dem Ausführungsbeispiel absolute (Gesamt-)Wärmeverluste von ca. 7.300 kWh. Diese Verluste betragen ca.48 % von der gespeicherten Energie. Hier ist noch zu erwähnen, dass die Geometrie des Wärmespeichers ein Zylinder ist bei dem D = H ist. Wenn der Wärmespeicher hingegen eine Würfel-Form besitzt, liegt (bei sonst gleichen Voraussetzungen) das Minimum für die Wärmeverluste bei ca. 58 % von der gespeicherten Energie, also höher als bei einer Zylinderform mit der Charakteristik D=H Bei einem Wärmespeicher der die Form einer Kugel hat, betragen die Wärmeverluste hingegen nur um 30 %. Daraus kann man schließen, dass die Geometrie des Langzeitwärmespeichers eine wichtige Rolle bei den Wärmeverlusten spielt.

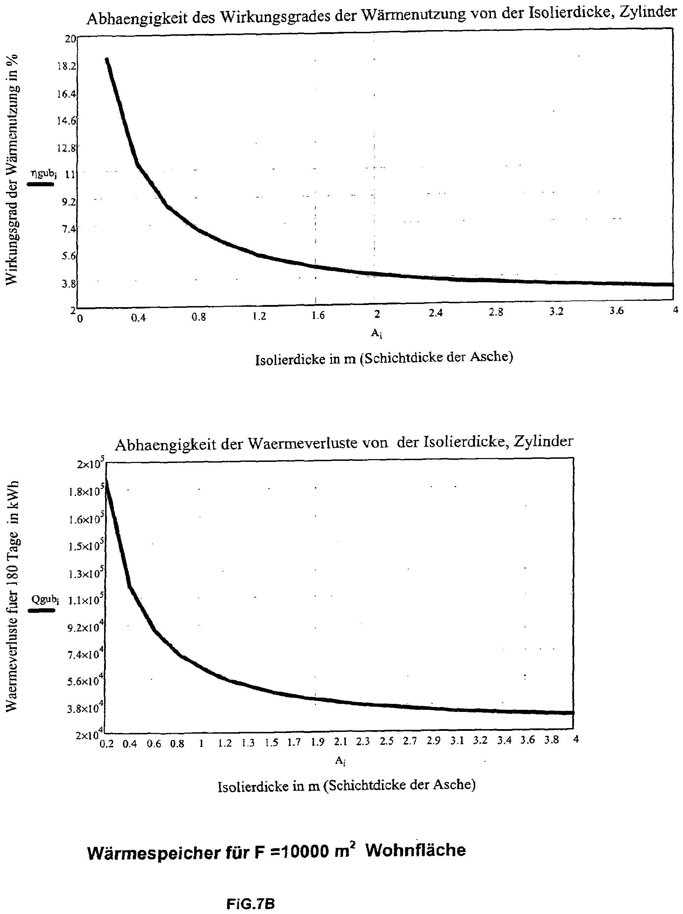

Gemäß **Fig.7B** ist ein Langzeitwärmespeicher als Zylinder (D=H) berücksichtigt worden, der so viel die Wärmeenergie während der 6 Sommermonate speichern kann um 10.000 m$^2$ (200 Wohnungen) vom November bis April beheizt zu werden können. Aus dem Diagramm in **Fig.7B** kann man sehen, dass sich das Minimum für die Ascheschicht hin zu einer größeren Schichtdicke verschoben hat. Man sieht weiter, dass kein großer Unterschied bezüglich der Wärmeverluste für eine Schichtdicke zwischen 1.8 m und 4 m besteht. Diese Erkenntnis ist sehr wichtig für die Wirtschaftlichkeit des Langzeitwärmespeichers. Die Wärmeverluste während der Speicherzeit betragen für eine Schichtdicke von 1.8 m um 38.000 kWh und relativ gesehen, bezogen auf die gespeicherte Energie, betragen sie ca.3.9 % .Daraus kann man schließen, dass mit der Zunahme der Speicherkapazität die relative Wärmeverluste gewaltig abnehmen. Bei einem vergleichbar ausgelegten Langzeitwärmespeicher, jedoch mit einer Würfelform, betragen die relativen Wärmeverluste ca. 4.9 %

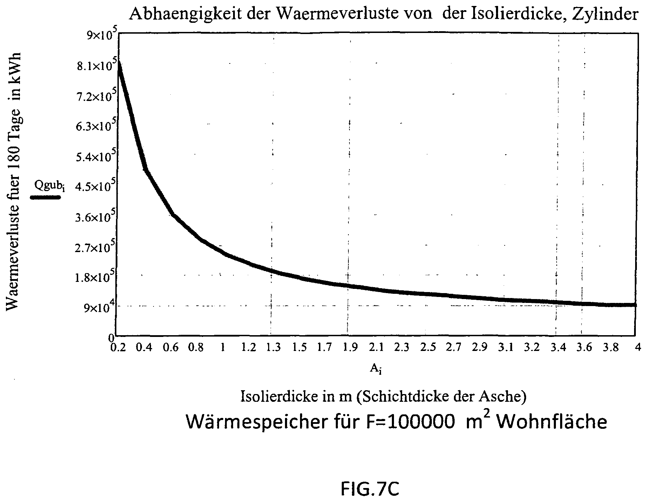

Bei einem der **Fig. 7C** zugrunde gelegten Langzeitwärmespeicher für eine Wohnfläche von 100.000 m$^2$ (2000 Wohnungen) und in zylindrische Form (D=H) sieht man, dass sich das Minimum für die Wärmeverluste weiter zu einem größeren Schichtdicken der Asche hin verschiebt. Der Unterschied bei den Wärmeverlusten für 1.8 m Schichtdicke und 4 m Schichtdicke ist vergleichsweise gering. Die Wärmeverluste während der Speicherzeit betragen als absoluter Wert ca., 160.000 kWh (1.8m Schichtdicke der Asche) und die relative Wärmeverluste betragen ca. 1.6 %. Bei Würfelform betrügen die Wärmeverluste 180.000 kWh (1.8 m Schichtdicke der Asche) und die relativen Wärmeverluste ca. 1.8 %, wohingegen sie bei Kugelform 93000kWh (1.8 m Schichtdicke der Asche) oder die relativen Wärmeverluste 0.9 % betragen.

Es hat sich demnach gezeigt, dass der Vorteil eindeutig zu Gunsten von kugelförmigen Langzeitwärmespeichern ausfällt. Danach kommt der Wärmespeicher der eine zylindrische Form (D=H) besitzt Der Wärmespeicher mit der Würfelform hat die größten Wärmeverluste. Anfertigungstechnisch gesehen, wäre der kugelförmige Wärmespeicher kostenintensiv und kompliziert in der praktischen Realisierung. Als optimale Kompromisslösung ist ein zylindrischer Wärmespeicher mit D=H anzusehen, mit einer Isolierasche-Schichtdicke die in der Größenordnung von 1,4m bis 1,8m liegt.

Weitere Ausführungsbeispiele:

1) Der Langzeitwärmespeicher gemäß dieser Erfindung, kann im Bereich der Nutzung der alternativen Energie einen Durchbruch erzielen, weil ein erheblicher Anteil der Energieprobleme durch die langzeitige Speicherung der Solarenergie gelöst werden können. Z.B. kann ganz Europa, bis nach Südengland auf das neue Wärmespeichersystem gemäß dieser Erfindung zur Lösung der Energieprobleme zurückgreifen. Man wird nicht mehr die Realisierung des "DESERTEC"- Projektes(Sahara Projekt) unbedingt anstreben müssen, um die Stromproduktion für Europa zu sichern. In jedem südlichen Europäischem Land (Spanien, Italien, Griechenland, Türkei) wird es möglich sein, wirtschaftliche Solarkraftwerke mit stetiger Stromproduktion während des ganzes Jahres (Tag und Nacht) durch die Nutzung der Langzeitwärmespeicherung gemäß dieser Erfindung zu bauen. Neben der Stromgewinnung aus Sonnenenergie, besteht auch die Möglichkeit Solarheizkraftwerke zu bauen wo man den kompletten Heizungsbedarf mittels der Solarenergie decken kann.

2) Bei der Nutzung der Solarenergie für die Gebäudebeheizung ist die Speicherkapazität des Langzeitwärmespeichers größer als die Speicherkapazität bei der Stromproduktion weil die Temperaturdifferenz bei der Heizung (800 °C - 100 °C) 700° C beträgt .Bei der Stromerzeugung beträgt die Temperaturdifferenz im Langzeitwärmespeicher bei der Wärmekoppellung im besten Fall um 500 °C. Bei der Wärmeentkoppelung aus dem Langzeitwärmespeicher für die Heizung (bei Heizkraftwerken), beträgt die Temperaturdifferenz 700 °C (max. 800 °C - min. 100 °C).Dabei ergibt sich eine Speicherkapazität von z.B. 450 kWh/m3, während bei der Stromproduktion bei einer Temperaturdifferenz von 500 °C die spezifische Speicherkapazität ca. 324 kWh/m$^3$ betrüge.

3) Wenn man den Langzeitwärmespeicher auslegt, um z.B. eine Stadt mit 50.000 Wohnungen mit jeweils 50 m$^2$ Wohnfläche pro Wohnung während des Winters, zu beheizen, und wenn man davon ausgeht, dass für die Heizung einer Wohnung von 50 m$^2$ Wohnfläche vom November bis April nächstes Jahres ca. 11000 kWh erforderlich sind, so lässt sich die Abmessung der Speichermasse bestimmen zu: D = 113 m und H = 113 m. Mit Isolierascheschicht beträgt der Außendurchmesser des Langzeitwärmespeichers; D=116 m Ha =116 m.

4) Wenn man davon ausgeht, dass auch im Winter die Sonne scheint, lässt sich laut Statistik z.B. für Balkanländer die Energiegewinnung während der Wintermonate bestimmen. Die Sonnenscheinstunden sind in den Wintermonaten wie folgt: im November sind es 118 h im Dezember 54 h, im Januar 78 h, im Februar 90 h, im März 150 h und im April 208 h. Wenn man sich einen guten Konzentrator zur Konzentration der Sonnenenergie in einem Langzeitwärmespeicher denkt, der im Winter die Sonnenenergie nutzt, dann wäre es sinnvoll den Wärmespeicher für 90 Tage Speicherzeit auszulegen und dem entsprechend hätte man für die Speichermasse die Abmessungen; D= 90 m , H =90 m. Mit Isolierascheschicht dazu wird der Außendurchmesser des Wärmespeichers: D =93 m H =93 m. Dabei sind die Wärmeverluste während der Speicherung der Sonnenenergie (180 Tage) ca. 0.6% bezogen auf die gesamte gespeicherte Energie. Man kann daraus erkennen, dass man die Größe des Langzeitwärmespeichers mit der Größe und mit der Anzahl der Konzentratoren abstimmen soll um die optimalen Verhältnisse bei der Nutzung der Solarenergie erzielen zu können. Es ist durchaus deutlich, dass das neue Wärmespeichersystem den Durchbruch bei der Nutzung der alternativen Energie darstellt.

5) Außer Sonnenenergie besteht auch die Möglichkeit andere Energiearten zu speichern. Z.B. Wärme aus Biomasse, z.B. in der Weise, dass man im Sommer verschiedene Abfälle verbrennt und die gespeicherte Energie im Winter für die Heizung nutzt. Man kann auch Windenergie speichern und während der windlosen Tage aus der gespeicherten Energie den Strom erzeugen. Auf diese Weise wäre bei Windenergie die Stetigkeit gesichert. In diesem Fall muss man den Strom nicht unbedingt mittels Wasserdampf erzeugen (der Wirkungsgrad ist zu niedrig) sondern mittels einer Luftmaschine die mit heißer Luft arbeitet. Damit kann dementsprechend ein hoher Wirkungsgrad erzielt werden (Größenordnung um 40 % bis 50%) Diese Luftmaschine müsste nach Carnot Prozess arbeiten. Auch der Einsatz eines Stirling Motors kann sinnvoll sein.

6) Zahlenmäßig kann man anhand eines Beispiels die Speicherkapazität, wie folgt bestimmen: Es sei eine Schüttungsdichte von ps=2100 kg/m$^3$ gewünscht, dieser Schüttungsdichte entspricht einem Lückenvolumen von $\varepsilon$ =0.276. Daraus geht hervor, dass man die Steinschüttung vorzugsweise als eine polydisperse Schüttung gestalten sollte, um die erforderliche Schüttungsdichte zu bekommen. Die Körnungszusammensetzung wird labormäßig bestimmt. Wenn man davon ausgeht, dass die maximale Temperatur der Schüttung 800 °C hoch sein soll und wenn die mittlere spezifische Wärmekapazität der Steinschüttung zwischen 20 °C und 800 °C 1200 J/kgK beträgt, ergibt sich eine spezifische Wärmespeicherkapazität der Steinschüttung im Temperaturbereich zwischen 100 °C und 800 °C von 488 kWh/m$^3$. Die Speicherkapazität hängt davon ab, bis zu welchem Temperaturniveau die Temperatur der Schüttung durch die Wärmeentkoppelung herabsenkbar sein soll. Wenn Stromproduktion im Fokus steht bei der mit Wasserdampf und 20 bar Druck gearbeitet wird (213 °C Sattdampftemperatur), ist es zweckmäßig, die Wärmespeichermasse bis zu 300 °C herab zu kühlen. Für diese Temperatur der Wärmespeichermasse ergibt sich eine Speicherkapazität von 348 kWh/m$^3$.

7) Zur Erhöhung der spezifischen Speicherkapazität des Langzeitwärmespeichers wird eine polydisperse Schüttung - beispielhaft ein Granulat umfassend mindestens zwei Korngrößen und/oder Korngrößenverteilungen/-bandbreiten verwendet: Es wird gezeigt wie man die spezifische Speicherkapazität eines Wärmespeichers durch die Gestaltung des Kornspektrums der Schüttung beeinflussen kann:

Es sei die wahre Dichte des Diabas Steines p w := 2900 kg /m3 und die Porosität der Kornschüttung $\underline{\varepsilon}$ := 0.4. Dann kann die Schüttdichte berechnet werden $\rho s := \rho w \cdot (1 - \varepsilon) = 1.74 \times 10^3$ kg /m3. Wenn man davon ausgeht, dass die Steinschüttung bis zu einer maximalen Temperatur tsmax := 800 °C erwärmt wird und bis zu einer minimalen Temperatur

$$tmin := 100 \ °C$$

abgekühlt wird, bekommt man ein

$$\Delta t := tsmax - tmin = 700 \ °C.$$

Mit einer spezifischen Wärmekapazität des Steines von $\underline{C}$ := 1050 J /kgK lässt sich die Speicherkapazität der Steinschüttung pro Volumeneinheit wie folgt berechnen:

$$\Delta Q := \frac{(\rho s \cdot C \cdot \Delta t)}{3612000} = 354.07 \ \text{kWh/m3}.$$

Die spezifische Speicherkapazität der Schüttung beträgt bei $\underline{\varepsilon 1} := {}_{0.35}$ und $\rho s1 := \rho w \cdot (1 - \varepsilon 1) = 1.885 \times 10^3$ kg /m3:

$$\Delta Q1 := \left[\frac{(\rho s1 \cdot C \cdot \Delta t)}{3612000}\right] = 383.576 \ \text{kWh/m3}$$

und bei $\varepsilon 2 := 0.3$ und $\rho s2 := \rho w \cdot (1 - \varepsilon 2) = 2.03 \times 10^3$ kg /m3:

$$\Delta Q2 := \left[\frac{(\rho s2 \cdot C \cdot \Delta t)}{3612000}\right] = 413.081 \ \text{kWh/m3}$$

und bei $e3 := 0.2$ und $\rho s3 := \rho w \cdot (1 - \varepsilon 3) = 2.32 \times 10^3$ kg /m3:

$$\Delta Q3 := \left[\frac{(\rho s3 \cdot C \cdot \Delta t)}{3612000}\right] = 472.093 \ \text{kWh /m3.}$$

Man sieht daraus, dass die spezifische Speicherkapazität der Schüttung durch die Vergrößerung der Schüttdichte zunimmt. Gleichzeitig wird. Die Erhöhung der Schüttdichte kann durch die geschickte Vermischung verschiedener Kornfraktionen erreicht werden, wie anhand eines Zahlenbeispiels gezeigt wird:

Nehmen wir an, dass sich die Ausgangsschüttung aus folgender Kornfraktion zusammensetzt: $v1 := 0.3$ m3/m3, Volumenanteil $d1 := 0.03$ m Korndurchmesser und $\varepsilon 1 := 0.4$ Lückenvolumen $v2 := 0.3$ m3/m3 Volumenanteil $d2 := 0.05$ m Korndurchmesser und $L\varepsilon 2 := 0.4$ Lückenvolumen $v3 := 0.4$ m3 /m3, Volumenanteil $d3 := 0.08$ m , Korndurchmesser und $\varepsilon 3 := 0.4$ Lückenvolumen. Dies soll die Ausgangsschüttung I sein und der mittlere Korndurchmesser und die mittlere spezifische Oberfläche lassen sich berechnen zu $dpm := 48$ mm und $fspm := 75.6$ m2 /m3. $\varepsilon m := 0.4$ ist das mittlere Lückenvolumen und $\rho s := \rho w \cdot (1 - \varepsilon m) = 1.74 \times 10^3$ kg /m3 ist die Schüttdichte der Ausgangsschüttung I.

Wenn man der Ausgangsschüttung eine Fraktion kleineren Durchmessers beimischt zeigt sich, dass man die Schüttdichte vergrößern kann. Eigenschaften der Feinkornschüttung, die mit der Ausgangsschüttung vermischt wird, seien:

$v4 := 0.3$ m3/m3 Volumenanteil (30%), $d4 := 0.005$ m Korndurchmesser, $\varepsilon 4 := 0.4$ Lückenvolumen $v5 := 0.4$ m3/m3 Volumenanteil (40%) $d5 := 0.01$ m Korndurchmesser $\varepsilon 5 := 0.4$ Lückenvolumen $v6 := 0.3$ m3/m3 Volumenanteil (30%) $d6 := 0.02$ m Korndurchmesser $\varepsilon 6 := 0.4$ Lückenvolumen (jeweils bei Einkornschüttung).

Bei dieser Feinkornmischung lässt sich der mittlere Korndurchmesser, mittlere spezifische Oberfläche, Lückenvolumen und die Schüttdichte berechnen: $dpm1 := 8.696$ mm $fsgmis := 414$ m2/m3 $\varepsilon mis := 0.4$ kg /m$^3$ $psmis := \rho \cdot w (1 - \varepsilon mis) = 1.74 \times 10^3$.

Wenn man die Wärmespeichermasse mit den Abmessungen zugrunde legt: Durchmesser (Dsp) der Wärmespeichermasse $Dsg := 4.46$ m, $H := 4.46$ m die Höhe der Wärmespeichermasse, Volumen (Vspm) der Speichermasse $Vspm := 69.678$ m3, dann beträgt das Lückenvolumen (VL) im Speicher: $VL := \varepsilon m \cdot Vspm = 27.871$ m3. Wenn man ferner davon ausgeht, dass 50 % des Lückenvolumens mit einer Feinkornmischung befüllt wird, dann ergibt sich nach der Vermischung der beiden Schüttungen von Grob- und Feinkorn: ein mittleres Lückenvolumen der Schüttung von $stot := 0.28$, eine mittlere Schüttdichte der Schüttung von $pstot := \rho w \cdot (1 - \varepsilon tot) = 2.088 \times 10^3$ eine mittlere spezifische Oberfläche der Schüttung von $fsptot := 165.6$ m2/m3 und ein mittlerer Korndurchmesser der Schüttung von $dmtot := 26$ m. Wenn man die neuen Parameter in die Rechnung einbezieht, lässt sich die spezifische Speicherkapazität wie folgt, berechnen

$$\Delta Qtot := \left[\frac{(\rho stot \cdot C \cdot \Delta t)}{3612000}\right] = 424.884 \ \text{kWh /m3.}$$

Man sieht daraus, dass durch die Zumischung von Feinkornschüttung der Zuwachs der spezifischen Speicherkapazität somit: $\Delta Qtot - \Delta Q = 70.814$ kWh /m3 beträgt, was 20 % Anstieg bedeutet.

Bei einem Korngrößenspektrum der Mischschüttung im Sinne dieser Erfindung lässt sich der minimale Zwischenabstand den Körner des minimalen Durchmessers und der Zwischenabstand der Körner für den maximalen Durchmesser, z.B. bei einer quadratischen und bei einer rhombischen Packung, bestimmen. Hierin wird die rombische Packung mit 2/3 und die quadratische Packung mit 1/3 Volumenanteil berücksichtigt. Dies kann rechnerisch bestimmt werden wobei sich die folgende Kornverteilung des Feinkorngranulats ergibt: 1/3 Kornspektrum von12 bis 30 mm und 2/3 Kornspektrum von 4mm bis 12 mm.

8)

Tabelle 1

| Nr. | Dp(mm) Partikeldurchmesser | Λp (W/mK) WärmeleitFähigkeit der Partikel | t°C Temperatur der Schüttung | Λeff (W/mK) effektive Wärme Leitfähigkeit der Isolierschicht | Δ(m) Schüttdichte der Isolierung | K =(Λeff/Δ) W/m2K Wärmedurchgangszahl durch die Isolierschicht |
|---|---|---|---|---|---|---|
| 1 | 0.001 1(µ) | 0.1 | 100 | 0.033 | 2 | 0.0165 |
| 2 | 0.01 10(µ) | 0.1 | 100 | 0.058 | 2 | 0.029 |
| 3 | 0.1 100(µ) | 0.1 | 100 | 0.064 | 2 | 0.032 |
| 4 | 1 | 0.1 | 100 | 0.067 | 2 | 0.0335 |
| 5 | 5 | 0.1 | 100 | 0.079 | 2 | 0.0395 |
| 6 | 10 | 0.1 | 100 | 0.089 | 2 | 0.0445 |
| 7 | 20 | 0.1 | 100 | 0.105 | 2 | 0.0525 |
| 8 | 50 | 0.1 | 100 | 0.138 | 2 | 0.069 |

In der **Tabelle1** ist die Abhängigkeit der effektiven Wärmeleitfähigkeit (Aeff (W/mK)) und dem entsprechend die Wärmedurchgangszahl K =(Λeff/ Δ) der Isolierschüttung (in diesem Fall ist es die mikronisierte Asche) in Abhängigkeit vom Korndurchmesser angegeben, wobei die Temperatur in der Schüttung und die Wärmeleitfähigkeit des Kornes bleiben als konstante Größen.

Tabelle 2

| Nr. | Dp(mm) Partikeldurchmesser | Λp (W/mK) Wärmeleitfähigkeit der Partikel | t°C Temperatur der Schüttung | Λeff (W/mK) effektive Wärmeleitfähigkeit der Isolierschicht | Δ(m) Schüttdichte der Isolierung | K =(Λeff/Δ) W/m2K Wärmedurchgangszahl durch die Isolierschicht |
|---|---|---|---|---|---|---|
| 1 | 0.001 1(μ) | 1.5 | 100 | 0.045 | 2 | 0.0225 |
| 2 | 0.01 10(μ) | 1.5 | 100 | 0.148 | 2 | 0.074 |
| 3 | 0.1 100(μ) | 1.5 | 100 | 0.22 | 2 | 0.11 |
| 4 | 1 | 1.5 | 100 | 0.241 | 2 | 0.1205 |
| 5 | 5 | 1.5 | 100 | 0.272 | 2 | 0.136 |
| 6 | 10 | 1.5 | 100 | 0.307 | 2 | 0.1535 |
| 7 | 20 | 1.5 | 100 | 0.375 | 2 | 0.1875 |
| 8 | 50 | 1.5 | 100 | 0.549 | 2 | 0.2745 |

In der Tabelle 2 sind alle Größen außer der Wärmeleitfähigkeit der Partikel Λp (W/mK) gleich geblieben. Man sieht aus der Tabelle 2, dass die Wärmeleitfähigkeit der Partikeln eine gravierende Rolle bei der Wärmeleitung durch die Schüttung hat. Es ist mit Absicht der Wert für Λp =1.5 W/mK berücksichtigt um zu prüfen ob man den Sand in der Wüste als Isolierschicht verwenden kann, weil übrigerweise in der Wüste keine Asche vorhanden ist. Man sieht aus der Tabelle 2, dass die Wärmeleitfähigkeit der Isolierschüttung stark zunimmt. Daraus kann man schließen, dass für die Isolierschüttung als Alternative zur mikronisierten Asche ein mineralischer Stoff der schwammförmige Struktur aufweist, verwendet werden kann. Durch Mahlen kann das schwammförmige Material in micronisierte Form gebracht werden und als Isolierstoff verwendet werden. Die micronisierte Asche ist schon schwammförmig vorhanden weil durch die Verbrennungsreaktion der Kohlenstoff mit dem Sauerstoff aus der Gitterstruktur abreagiert hat.

Zusammenfassend kann man sagen, dass außer mikronisierter Asche ein Mineralstoff, der eine schwammförmige Struktur aufweist als Isolierstoff für den Wärmespeicher verwendet werden kann. Unter Umständen kann man Isolierkeramik oder Abfall aus Ziegelstein verwenden, die vorher in mikronisierte Form gebracht worden ist .Aus der Tabelle 2 geht weiter hervor, dass man unter Umständen den Wüstensand als Isolierstoff einsetzen kann wenn man das Korn unter 10 μ zerkleinert. Hier stellt sich die Frage der Wirtschaftlichkeit.

In diesem Sinne bietet sich eine neue Möglichkeit an, nämlich eine Technologie zu entwickeln die extra mikronisierte Asche(100%) aus aschereicher Kohle produziert. Dabei kann man die Wärmeenergie zur Stromerzeugung wie üblich nutzen. Das wäre eine sinnvolle Möglichkeit.

Gemäß bevorzugter Ausführungsformen der Erfindung kann vorgesehen sein, dass auf der Schüttung (5) eine oder mehrere, insbesondere zwei Lage/n von Steinen (6), insbesondere Ziegelsteinen, angeordnet ist/sind, und/oder unterhalb der Gesteinsschüttung (1) eine Feinkornschüttung (7) angeordnet ist, die, vorzugsweise, der gleichen Herkunft wie die Gesteinsschüttung (1) ist, und/oder die Gesteinsschüttung (1), insbesondere das die Gesteinsschüttung umgebende Mauerwerk (2), von einer Pulverschüttung (16), insbesondere aus mikronisierter, Asche, umgeben ist, und/oder um eine die Gesteinsschüttung (1) umgebende Isolieraschschicht (16) eine Verkleidung (23) aus Blechschalen (24) vorgesehen ist, insbesondere in Form eines Vielecks (25), insbesondere, wenn eine Abdeckung der Gesteinsschüttung (1) des Mauerwerks (2), der Steine (17) und der Isolieraschschicht (16) mittels des Deckels (26) in der Weise erfolgt, dass der Deckel (26) mit der Außenverkleidung (23) wasserdicht verbunden ist, insbesondere, wenn am Deckel (26) Füllöffnungen (22a) und (22b) vorgesehen sind, insbesondere um den Raum zwischen der Außenverkleidung (23) und dem Mauerwerk (2) mit Pulverschüttung (16) zu befüllen, insbesondere, wenn das ganze Mauerwerk (2) und die Gesteinsschüttung (1) auf einer Pulverschüttung (5) (Fig.1E) liegt, und/oder die Dicke der Pulverschüttung (16), entsprechend der Speicherkapazität und, vorzugsweise, entsprechend der Geometrie, gewählt ist, und/oder der Langzeitwärmespeicher die Form eines Zylinders hat bei dem, vorzugsweise, der Durchmesser und die Höhe der Wärmespeichermasse gleich sind (D =H) und, besonders bevorzugt, nach der Isolierung der Wärmespeichermasse mit Pulverschüttung (16, 5) der Durchmesser und die Höhe des Zylinders annähernd gleich (D=H) sind, und/oder der Wärmespeicher auf einer Platte (3) liegt, insbesondere um Feuchtigkeitseintritt in die Isolierung oder in die Wärmespeichermasse zu unterbinden, und/oder der Wärmespeicher im Untergrund verlegt wird, insbesondere, dass der Wärmespeicher in einer Hülle (32), insbesondere aus Metall, die wasserdicht verschlossen wird um das Eindringen von Feuchtigkeit, insbesondere von Grundwasser in die Isolierung oder in die Wärmespeichermasse zu unterbinden, und/oder die Gesteinsschüttung eine Schüttdichte von 1600 kg/m$^3$ bis 2300 kg/m$^3$ oder mehr aufweist.

<div align="center">BEZUGSZEICHENLISTE</div>

| | | | |
|---|---|---|---|
| 1 | Gesteinsschüttung | 20 | Flanschverbindung |
| 2 | Mauerwerk | 21 | Bodensegment der |
| 2a | tragendes Mauerwerk | | Außenverkleidung |
| 3 | Platte | 22 | Deckel für die Außenverkleidung |
| 4 | Fundament | | |
| 5 | Pulverschüttung | 22a | kleine Öffnung |
| 6 | Steine | 22b | große Öffnung |
| 7 | Feinkornschüttung | 23 | Außenverkleidung |
| 7a | Feinkornschüttung | 24 | Blechschale |
| 8 | Zuluftkanal | 25 | Vieleck aus Blechschalen (24) |
| 8a | Zuluftverteilkanäle | 26 | Deckel |
| 9 | Eintrittsrohr für die heiße Luft | 27 | Steg |
| 10 | Schamotteziegel | 28 | Öffnungen |
| 11 | Austrittsöffnungen für die heiße Luft | 29 | Isolierung |
| | | 30 | Trapezblech |
| 12 | Abluftkanal | 31 | Untergrund |

| 13 | Luftabführrohr | 32 | Zylinder |
|----|----------------|-----|----------|
| 14 | Isolierung der Luftleitungen | 33 | Luftrohrleitung-Heißlufteintritt |
| 15 | Stahlrohr | 34 | Luftrohrleitung-Luftaustritt |
| 16 | Pulverschüttung | 100 | Langzeitwärmespeicher |
| 17 | Steine | Delta A | Dicke |
| 18 | Außenverkleidung | D | Durchmesser |
| 19 | Verkleidungssegment | H | Höhe |

**Patentansprüche**

1. Langzeitwärmespeicher zur langfristigen Speicherung der Solarenergie und anderer Energie- Arten umfassend eine Wärmespeichermasse, **gekennzeichnet durch** ein thermisch isoliertes Festbett aus einer als Wärmespeichermasse dienenden Gesteinsschüttung (1) aus einem für hohe Betriebs-Temperaturen, insbesondere für Temperaturen zwischen 100 Grad C und 1000 Grad C, vorzugsweise zwischen 300 Grad C und 900 Grad C, geeigneten Material, bei dem die Gesteinsschüttung **(1),** samt einer Luftzuführung und Luftabführung, allseitig oder überwiegend, insbesondere unter Zwischenfügen einer Hülle aus geformten Steinen **(2, 6, 17),** von einer Pulverschüttung **(5, 16),** insbesondere von einer Ascheschüttung eingehüllt ist.

2. Langzeitwärmespeicher nach Anspruch 1, **gekennzeichnet durch** ein thermisch isoliertes Festbett aus einer als Wärmespeichermasse dienenden Gesteinsschüttung **(1);** die Gesteinsschüttung bildet eine polydisperse Schüttung, insbesondere indem das Lückenvolumen der Gesteinsschüttung, die als Granulat ausgebildet ist, einer ersten Korngröße oder Korngrößenverteilung ein Granulat einer zweiten Korngröße oder Korngrößenverteilung aufnimmt.

3. Langzeitwärmespeicher nach Anspruch 1 oder 2, **gekennzeichnet durch** eine große spezifische Wärmekapazität der Gesteinsschüttung **(1),** insbesondere von größer als 600J/kgK großer Wärmeleitfähigkeit, insbesondere von größer als 1W/mK sowie, insbesondere großer Dichte,. insbesondere von größer als 2kg/dm$^3$, vorzugsweise vulkanischer Herkunft, wie Diabas, Basalt, Granit und/oder Gneis

4. Langzeitwärmespeicher nach einem der Ansprüche 1 bis 3, **gekennzeichnet durch** ein thermisch isoliertes Festbett aus einer als Wärmespeichermasse dienenden Gesteinsschüttung **(1);** die Gesteinsschüttung **(1),** samt einer Luftzuführung und Luftabführung, ist allseitig oder überwiegend, zumindest seitlich, von einer, insbesondere zylindrischen, Hülle aus geformten Steinen **(2, 6, 17),** insbesondere von einem, Mauerwerk (2) eingehüllt.

5. Langzeitwärmespeicher nach einem der Ansprüche 1 bis 4, **dadurch gekennzeichnet, dass**, die Gesteinsschüttung direkt oder indirekt auf einer Schüttung (5) aus, insbesondere mikronisiertem, Pulver aus einem Feststoff mit poröser oder faseriger Struktur, insbesondere aus einer Gruppe umfassend mikronisierte Asche, Pulver mit grosser Innenporenstruktur, Sand mit poriger Struktur, gemahlene Tonerde, gemahlener Ziegelstein, gemahlene abreagierte Feststoffe, wie Aktivkohle oder gemahlene Gesteine mit poriger Struktur sowie verschiedene organische Stoffe mit faserartige Struktur.

6. Langzeitwärmespeicher nach einem der Ansprüche 1 bis 5, **dadurch gekennzeichnet, dass** unterhalb der Gesteinsschüttung (1), insbesondere auf einer Feinkornschüttung **(7),** Zuluftverteilkanäle (8, 8a) angeordnet sind.

7. Langzeitwärmespeicher nach Anspruch 6, **dadurch gekennzeichnet, dass**, ein Hauptluftkanal (8) und Luftverteilkanäle (8a), insbesondere aus Schamotteziegel (10), so geformt werden, dass an den Luftverteilkanälen (8a) Austrittsöffnungen (11) für Heißluft vorgesehen sind, so dass die Luft gleichmäßig über den ganzen Boden der Gesteinsschüttung (1) verteilt wird.

8. Langzeitwärmespeicher nach einem der Ansprüche 1 bis 7, **dadurch gekennzeichnet, dass** am oberen Ende der Gesteinsschüttung (1) Abluftkanäle (12, 12a), insbesondere aus Schamotteziegel (10) so verlegt sind, dass die abströmende Luft über den ganzen Querschnitt der Gesteinsschüttung (1) in den Kanälen (12, 12a) ansammelt und nach außen hin abgeführt wird.

9. Langzeitwärmespeicher nach Anspruch 7 oder 8 **dadurch gekennzeichnet, dass** die Zwischenräume der Zuluftkanäle (8,8a) und /oder der Luftsammelkanäle (12, 12a) mit Gesteinsschüttung (1) ausgefüllt.

10. Langzeitwärmespeicher nach Anspruch 8 oder 9, **dadurch gekennzeichnet, dass**, der Raum oberhalb der Luftsammelkanäle (12, 12a) ist mit Feinkornschüttung (7a) befüllt ist.

11. Langzeitwärmespeicher nach Anspruch 10, **dadurch gekennzeichnet, dass** die Feinkornschüttung **(7a)** zweischichtig mittels des Ziegelsteines **(17)** aufgebaut ist.

12. Langzeitwärmespeicher nach Anspruch 11 **dadurch gekennzeichnet, dass** über der Gesteinsschüttung (1), insbesondere über die Steine (17), eine Pulverschüttung (16), insbesondere aus mikronisierter Asche, als Isolierung angeordnet ist..

13. Langzeitwärmespeicher nach Anspruch 12 **dadurch gekennzeichnet, dass** die Schüttung (16) die gleiche Dicke aufweist wie die Schüttung (16) die seitlich um das Ziegelmauerwerk (2) angeordnet ist,

14. Langzeitwärmespeicher nach einem der Ansprüche 6 bis 13, **dadurch gekennzeichnet, dass** für den Lufteintritt in die Zuluftverteilkanäle (8, 8a), und/oder für den Luftaustritt aus den Abluftverteilkanäle (12, 12a), eine in ein Schutzrohr, insbesondere aus Stahl, eingelegte und isolierte Luftzuführungsrohrleitung, vorgesehen ist, die, vorzugsweise, mit einer Verkleidung versehen ist.

15. Verfahren zur langfristigen Wärme-Speicherung von Solarenergie und anderer Energie-Arten mit wechselnder Verfügbarkeit mittels eines Langzeitwärmespeichers, bei dem die Sonnenenergie oder die andere Energie-Art mit wechselnder Verfügbarkeit zunächst auf ein Wärmeübertragungsmedium übertragen wird und anschließend der Transport der Wärmeenergie in den Langzeitwärmespeicher und auf die Wärmespeichermasse erfolgt, **dadurch gekennzeichnet, dass** als Wärmespeichermasse eine Gesteinsschüttung, die als Granulat ausgebildet ist, insbesondere großer spezifischer Wärmekapazität, große Wärmeleitfähigkeit und/oder großer Dichte, insbesondere vulkanischer Herkunft, wie Basalt Gestein, Diabas Gestein, Granit Gestein und/oder Gneis Gestein, in einem Festbett vorgesehen wird, dass das Granulat in geeigneter Weise isoliert wird, so dass die Wärmeverluste während eines langen Zeitraumes niedrig bleiben, wobei der Wärme-Isolierstoff, vorzugsweise, eine Vielzahl von Kontaktwiderständen aufweist und/oder seine Wärmeleitfähigkeit niedrig ist und/oder seine Struktur schwammartig, faserig oder porös ist und ein mikronisiertes Pulver wie mikronisierte Asche umfasst, und dass das Granulat mittels eines mit dem Granulat wechselwirkenden Wärmeübertragungsmediums, insbesondere das Granulat durchströmenden Wärmeübertragungsfluids, insbesondere mittels Luft, auf hohe Temperatur erwärmt wird.

## Claims

1. Long-term heat storage device for the long-term storage of solar energy and other types of energy comprising a heat storage mass, **characterised by** a thermally insulated packed bed of rock bulk material (1) acting as a heat storage mass consisting of a material suitable for high operating temperatures, in particular temperatures between 100 degrees C and 1000 degrees C, preferably between 300 degrees C and 900 degrees C, in which the rock bulk material (1) and an air inlet and air outlet are enveloped all-around or for the most part by a powder bulk material (5, 16), in particular an ash bulk material, more particularly with the interspersion of a shell of shaped rocks (2, 6, 17).

2. Long-term heat storage device according to claim 1 **characterised by** a thermally insulated packed bed of rock bulk material (1) acting as a heat storage mass; the rock bulk material forms polydisperse bulk material, particularly in that the gap volume of the rock bulk material, which is in the form of granulate of a first particle size or particle size distribution takes up a granulate of a second particle size or particle size distribution.

3. Long-term heat storage device according to claim 1 or 2 **characterised by** a high specific heat capacity of the rock bulk material (1), in particular of greater than 600 J/kgK thermal conductivity, in particular of greater than 1W/mk, in particular by high density, in particular of greater than 2 kg/dm$^3$, preferably of volcanic origin, such as diabase, basalt, granite and/or gneiss.

4. Long-term heat storage device according to any one of claims 1 to 3 **characterised by** a thermally insulated packed bed of rock bulk material (1) acting as a heat storage mass; the rock bulk material (1) and an air inlet and air outlet are enveloped all-around or for the most part by a, in particular cylindrical, shell of shaped rocks (2, 6, 17), more particularly by masonry (2).

5. Long-term heat storage device according to any one of claims 1 to 4, **characterised in that** the rock bulk material is directly or indirectly on a bulk material (5) of, in particular micronised powder of a solid with a porous or fibrous structure, in particular of a group comprising micronised ash, powder with a large internal pore structure, sand with a porous structure, ground clay, ground brick, ground neutralised solids, such as active carbon or ground rock with a porous structure as well as various organic substances with a fibrous structure.

6. Long-term heat storage device according to any one of claims 1 to 5 **characterised in that** underneath the rock bulk (1), more particularly on a fine particle bulk (7), inlet air distribution channels (8, 8a) are arranged.

7. Long-term heat storage device according to claim 6 **characterised in that** a main air channel (8) and air distribution channels (8a), in particular of firebricks (10) are configured in such a way that on the air distribution channels (8a) outlet openings (11) for hot air are provided so that the air is evenly distributed over the entire base of the rock bulk (1).

8. Long-term heat storage device according to any one of claims 1 to 7 **characterised in that** at the upper end of the rock bulk (1) outlet air channels (12, 12a), in particular of firebrick (10), are laid in such a way that the outflowing air over the entire cross-section of the rock bulk material (1) is collected in the channels (12, 12a) and removed to outside.

9. Long-term heat storage device according to claim 7 or 8 **characterised in that** the intermediate spaces of the inlet air channels (8, 8a) and/or air collection channels (12, 12a) are filled with rock bulk material (1) .

10. Long-term heat storage device according to claim 8 or 9 **characterised in that** the space above the air collection channels (12, 12a) is filled with fine granulate bulk (7a).

11. Long-term heat storage device according to claim 10 **characterised in that** the fine granulate bulk (7a) is built up in two layers by means of the brick (17).

12. Long-term heat storage device according to claim 11 **characterised in that** above the rock bulk material (1), in particular over the rocks (17), a powder bulk material (16), more particularly of micronised ash, is arranged as insulation.

13. Long-term heat storage device according to claim 12 **characterised in that** the bulk material (16) has the same thickness as the bulk material (16) that is arranged laterally around the brick masonry (2).

14. Long-term heat storage device according to any one of claims 6 to 13 **characterised in that** for the inlet of air into the air distribution channels (8, 8a), and/or for the outlet or air from the air distribution channels (12, 12a), an insulated air supply pipe, more particularly of steel, inserted into a protective pipe, is provided, which is preferably fitted with sheathing.

15. Method for the long-term heat storage of solar energy and other types of energy with changing availability by way of a long-term heat storage device, in which the solar energy or other type of energy with changing availability is initially transferred to a transfer medium and subsequently the thermal energy is transported into the long-term heat storage device and to the heat storage mass **characterised in that** as the heat storage mass a rock bulk material which is in the form of granulate, in particular with a high specific heat capacity, high thermal conductivity and/or high density, more particularly of volcanic origin, such as basalt rock, diabase rock, granite rock and/or gneiss rock is provided in a packed bed,
**in that** the granulate is insulated in a suitable manner so that the heat losses over a long period remain low, wherein the thermal insulation material preferably comprises a plurality of contact resistances and/or its thermal conductivity is low and/or its structure is spongy, fibrous or porous, and comprises a micronised powder such as micronised ash and
**in that** the granulate is heated to a high temperature by means of a heat transfer medium interacting with the granulate, more particular a heat transfer fluid flowing through the granulate, more especially by means of air.

**Revendications**

1. Accumulateur de chaleur longue durée pour l'accumulation longue durée de l'énergie solaire et d'autres types d'énergie comprenant une masse d'accumulateur de chaleur, **caractérisé par** un lit fixe thermo-isolé d'un remblai de roche (1) d'un matériau approprié pour des températures de fonctionnement élevées, en particulier pour des températures entre 100 degrés C et 1000 degrés C, de préférence entre 300 degrés C et 900 degrés C, servant de masse d'accumulateur de chaleur, dans lequel le remblai de roche (1) y compris une amenée d'air et une évacuation d'air, est enveloppé d'un remblai de poudre (5, 16), en particulier d'un remblai de cendre, sur tous les côtés ou en majeure partie, en particulier par l'ajout intermédiaire d'une enveloppe de pierres (2, 6, 17) mises en forme.

2. Accumulateur de chaleur longue durée selon la revendication 1, **caractérisé par** un lit fixe thermo-isolé d'un remblai de roche (1) servant de masse d'accumulateur de chaleur ; le remblai de roche forme un remblai polydispersé, en particulier en ce que le volume d'intervalle du remblai de roche qui est formé en tant que granulat d'une première grosseur de grain ou granulométrie, reçoit un granulat d'une deuxième grosseur de grain ou granulométrie.

3. Accumulateur de chaleur longue durée selon la revendication 1 ou 2, **caractérisé par** une capacité thermique spécifique élevée du remblai de roche (1), en particulier supérieure à 600J/kgK de conductivité thermique élevée, en particulier supérieure à 1W/mK, ainsi en particulier de densité élevée, en particulier supérieure à 2kg/dm$^3$, de préférence d'origine volcanique comme la diabase, le basalte, le granit et/ou le gneiss.

4. Accumulateur de chaleur longue durée selon l'une des revendications 1 à 3, **caractérisé par** un lit fixe thermo-isolé d'un remblai de roche (1) servant de masse d'accumulateur de chaleur ; le remblai de roche y compris (1) une amenée d'air et une évacuation d'air est, sur tous les côtés ou en majeure partie, au moins latéralement, enveloppé par une enveloppe en particulier cylindrique de pierres (2, 6, 17) mises en forme, en particulier d'une maçonnerie (2).

5. Accumulateur de chaleur longue durée selon l'une des revendications 1 à 4, **caractérisé en ce que** le remblai de roche est directement ou indirectement sur un remblai (5), en particulier de poudre micronisée d'un corps solide à structure poreuse ou fibreuse, en particulier d'un groupe comprenant de la cendre micronisée, de la poudre à grosse structure de pores intérieurs, du sable à structure poreuse, d'alumine moulue, de brique moulue, de corps solides réagi moulus comme le charbon actif ou de roches moulues à structure poreuse ainsi que différentes substances organiques à structure fibreuse.

6. Accumulateur de chaleur longue durée selon l'une des revendications 1 à 5, **caractérisé en ce que** des canaux de distribution d'air entrant (8, 8a) sont disposés en-dessous du remblai de roche (1), en particulier sur un remblai de fines (7).

7. Accumulateur de chaleur longue durée selon la revendication 6, **caractérisé en ce qu'**un canal d'air principal (8) et des canaux de distribution d'air (8a), en particulier en brique d'argile réfractaire (10), sont ainsi formés que des ouvertures d'échappement (11) pour l'air chaud sont prévues sur les canaux de distribution d'air (8a) de sorte que l'air est distribué de manière uniforme sur tout le fond du remblai de roche (1).

8. Accumulateur de chaleur longue durée selon l'une des revendications 1 à 7, **caractérisé en ce que** des canaux d'air sortant (12, 12a), en particulier en brique d'argile réfractaire (10), sont ainsi posés sur l'extrémité supérieure du remblai de roche (1) que l'air sortant est collecté dans les canaux (12, 12a) sur toute la section du remblai de roche (1) et évacué vers l'extérieur.

9. Accumulateur de chaleur longue durée selon la revendication 7 ou 8, **caractérisé en ce que** les espaces intermédiaires des canaux d'air entrant (8, 8a) et/ou les canaux de collecte d'air (12, 12a) sont remplis de remblai de roche (1).

10. Accumulateur de chaleur longue durée selon la revendication 8 ou 9, **caractérisé en ce que** l'espace au-dessus des canaux de collecte d'air (12, 12a) est rempli de remblai de fines (7a).

11. Accumulateur de chaleur longue durée selon la revendication 10, **caractérisé en ce que** le remblai de fines (7a) est constitué de deux couches au moyen de la brique (17).

12. Accumulateur de chaleur longue durée selon la revendication 11, **caractérisé en ce qu'**un remblai de poudre (16), en particulier de cendre micronisée, est disposé sur le remblai de roche (1), en particulier sur les pierres (17), en tant qu'isolant.

13. Accumulateur de chaleur longue durée selon la revendication 12, **caractérisé en ce que** le remblai (16) présente la même épaisseur que le remblai (16) qui est disposé sur les côtés autour de la maçonnerie en brique (2).

**14.** Accumulateur de chaleur longue durée selon l'une des revendications 6 à 13, **caractérisé en ce que** pour l'entrée d'air dans les canaux de distribution d'air entrant (8, 8a) et/ou la sortie d'air hors des canaux de distribution d'air sortant (12, 12a), un tuyau d'amenée d'air inséré et isolé dans un tube de protection, en particulier en acier, est prévu, qui est doté de préférence d'un revêtement.

**15.** Procédé d'accumulation de chaleur longue durée de l'énergie solaire et d'autres types d'énergie à disponibilité variable au moyen d'un accumulateur de chaleur longue durée, dans lequel l'énergie solaire et l'autre type d'énergie à disponibilité variable est d'abord transmise sur un support de transfert thermique et ensuite a lieu le transport de l'énergie thermique dans l'accumulateur de chaleur longue durée et sur la masse d'accumulateur de chaleur, **caractérisé en ce qu'**en tant que masse d'accumulateur thermique, un remblai de roche qui est conçu en tant que granulat, en particulier de capacité thermique spécifique élevée, de conductivité thermique élevée et/ou de densité élevée, en particulier d'origine volcanique comme la roche basaltique, la roche diabasique, la roche granitique et/ou la roche gneissique, est prévu dans un lit fixe, que le granulat est isolé de manière appropriée de façon à ce que les pertes de chaleur pendant une longue durée restent faibles, dans lequel la substance thermo-isolante présente de préférence une pluralité de résistances de contact et/ou sa conductivité thermique est faible et/ou sa structure est spongieuse, fibreuse ou poreuse et comprend une poudre micronisée comme de la cendre micronisée et que le granulat est chauffé à haute température au moyen d'un support de transfert de chaleur interagissant avec le granulat, en particulier un fluide de transfert de chaleur traversant le granulat, en particulier au moyen d'air.

FIG.1

# Schnitt A-A

## FIG.1A

FIG.1B

**10**

B-B

**10**

FIG.1C

EP 2 847 442 B1

C-C

FIG.1D

EP 2 847 442 B1

D

ΔA    12    17    7a    ΔA

▽ Ascheniveau

ΔA

16

Luftaustritt ←

1

Lufteintritt →

H

ΔA

6    8    7    5

FIG.1E

## Detail "A"

FIG.1F

FIG.2

Schnitt A-A

FIG.2A

FIG.3

FIG. 4

**FIG.5**

EP 2 847 442 B1

Schnitt A-A

29

30

Δ

A

# FIG.5A

**FIG.6**

Erdbodenniveau

Luftaustritt  34  33  Lufteintritt

32  31

100

ΔA

ΔA

ΔA

A

A

EP 2 847 442 B1

Schnitt A–A

32

31

FIG.6 A

## Abhaengigkeit der Waermeverluste von der Isolierdicke, Zylinder

Isolierdicke in m (Schichtdicke der Asche)

Wärmespeicher für F=150 m² Wohnfläche

FiG.7A

Abhaengigkeit des Wirkungsgrades der Wärmenutzung von der Isolierdicke, Zylinder

Isolierdicke in m (Schichtdicke der Asche)

Abhaengigkeit der Waermeverluste von der Isolierdicke, Zylinder

Isolierdicke in m (Schichtdicke der Asche)

**Wärmespeicher für F =10000 m$^2$ Wohnfläche**

**FiG.7B**

Abhaengigkeit der Waermeverluste von der Isolierdicke, Zylinder

Isolierdicke in m (Schichtdicke der Asche)

Wärmespeicher für F=100000 m$^2$ Wohnfläche

FIG.7C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008135100 A
- DE 102010008059 A1